# EUROPÄISCHE PATENTSCHRIFT

(11) **EP 3 765 325 B1**
(45) Veröffentlichungstag und Bekanntmachung des Hinweises auf die Patenterteilung: **12.06.2024**
(21) Anmeldenummer: 19713368.9
(22) Anmeldetag: 12.03.2019
(51) Int. Cl.: B60L 5/24, B60L 53/16, B60L 53/35, B60L 53/36, B60L 5/36, B60L 5/00, B60L 5/42, B60M 1/36

(54) **SCHNELLLADESYSTEM UND VERFAHREN ZUR ELEKTRISCHEN VERBINDUNG EINES FAHRZEUGS MIT EINER LADESTATION**
FAST CHARGING SYSTEM AND METHOD FOR ELECTRICALLY CONNECTING A VEHICLE TO A CHARGING STATION
SYSTEME DE CHARGE RAPIDE ET PROCEDE DE CONNEXION ELECTRIQUE D'UN VEHICULE A UNE STATION DE CHARGE

(30) Priorität: 15.03.2018 DE 102018106046
(43) Veröffentlichungstag der Anmeldung: 20.01.2021
(73) Patentinhaber: Schunk Transit Systems GmbH, 35435 Wettenberg (DE)
(72) Erfinder: HEIEIS, Nils, 35423 Lich (DE); DOMES, Matthias, 61231 Bad Nauheim (DE); STAUBACH, Timo, 36358 Herbstein (DE); SCHNEIDER, Peter, 35112 Fronhausen (DE)
(74) Vertreter: advotec.
(86) Internationale Anmeldenummer: PCT/EP2019/056153
(87) Internationale Veröffentlichungsnummer: WO 2019/175165

(56) Entgegenhaltungen:
- EP-A1- 1 997 668
- EP-A1- 2 284 635
- EP-A1- 3 299 212
- WO-A1-2012/118422
- WO-A1-2016/128939
- WO-A1-2017/216260
- WO-A2-2011/079215
- WO-A2-2014/207537
- DE-A1-102014 226 357
- DE-A1-102016 103 919
- DE-A1-102016 212 584
- DE-U1-202016 101 174
- DE-U1-202016 101 174
- US-A1- 2016 167 532
- US-A1- 2017 080 813
- Ec Engineering: "Ride&Charge - fast charging system for electric bus by EC-Engineering", , 10 November 2017 (2017-11-10), XP055932521, Retrieved from the Internet: URL:https://www.youtube.com/watch?v=wFosi9 fdM4c [retrieved on 2017-11-10]
- Transinfo Pl: "Polski pantograf do autobusów elektrycznych", , 8 December 2017 (2017-12-08), XP093046887, Retrieved from the Internet: URL:https://www.youtube.com/watch?v=QYQcjl O8eiw [retrieved on 2023-05-15]
- Anonymous: "Lublin testuje autobus elektryczny z nowym systemem ladowania - Transport Publiczny", , 5 July 2017 (2017-07-05), pages 1-6, XP093046903, Retrieved from the Internet: URL:https://www.transport-publiczny.pl/wia domosci/lublin-testuje-autobus-elektryczny -z-nowym-systemem-ladowania-52359.html [retrieved on 2023-05-15]
- Andrzej Satke ET AL: "Declaration", , 31 December 2017 (2017-12-31), pages 1-1, XP093046910, Retrieved from the Internet: URL:NoURLavailable [retrieved on 2023-05-15]
- Anonymous: "Electric vehicle conductive charging system - Part 1: General requirements", SLOVENSKI STANDARD SIST EN 61851-1:2011, 1 October 2011 (2011-10-01), XP055930193, Retrieved from the Internet: URL:http://pp.bukovci.si/61851/SIST+EN+618 51-1+2011.pdf [retrieved on 2022-06-13]
- Maciejowski Arkadiusz: "Autobusy naladuja sie na przystanku? | Dziennik Polski", , 29 June 2016 (2016-06-29), pages 1-16, XP093050957, Retrieved from the Internet: URL:https://dziennikpolski24.pl/autobusy-n aladuja-sie-na-przystanku/ar/10347660 [retrieved on 2023-06-01]
- Mg: "Systemy ladowania autobusów elektrycznych od EC Engineering trafia m.in. do Warszawy i Bratyslawy | Polska Izba Motoryzacji", , 9 November 2017 (2017-11-09), pages 1-2, XP093050958, Retrieved from the Internet: URL:https://pim.pl/systemy-ladowania-autob usow-elektrycznych-od-ec-engineering-trafi a-m-in-do-warszawy-i-bratyslawy/ [retrieved on 2023-06-01]
- Anonymous: "Nowatorski system ladowania autobusów elektrycznych", , 28 June 2016 (2016-06-28), pages 1-6, XP093050959, Retrieved from the Internet: URL:https://krakow.wyborcza.pl/krakow/7,44 425,20316639,nowatorski-system-ladowania-a utobusow-elektrycznych.html [retrieved on 2023-06-01]
- Ec Engineering: "System Ride&Charge", , 22 November 2022 (2022-11-22), pages 1-4, XP093050963, Retrieved from the Internet: URL:NoURLavailable [retrieved on 2023-06-01]
- Kolciuk Bogdan: "Opinia techniczna dotyczaca eksploatacji testowej pantografowego systemu ladowania autobusów elektrycznych Ride&Charge.", , 22 November 2022 (2022-11-22), pages 1-1, XP093050972, Retrieved from the Internet: URL:NoURLavailable [retrieved on 2023-06-01]
- Ec Engineering: "Financial Documents EC Engineering", , 22 November 2022 (2022-11-22), pages 1-8, XP093050975, Retrieved from the Internet: URL:NoURLavailable [retrieved on 2023-06-01]
- Ec Engineering: "Oryginalna instrukcja obslugi PL", , 22 November 2022 (2022-11-22), pages 1-24, XP093050976, Retrieved from the Internet: URL:NoURLavailable [retrieved on 2023-06-01]
- Ec Engineering: "Ksiazka serwisowa", , 22 November 2022 (2022-11-22), pages 1-18, XP093050978, Retrieved from the Internet: URL:NoURLavailable [retrieved on 2023-06-01]

## Beschreibung

Die Erfindung betrifft ein Schnelladesystem für elektrisch angetriebene Fahrzeuge, insbesondere Elektrobusse oder dergleichen, und ein Verfahren zur Ausbildung einer elektrisch leitenden Verbindung zwischen einem Fahrzeug und einer stationären Ladestation mit einer Kontaktvorrichtung, einer Ladekontaktvorrichtung und einer Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei die Ladekontaktvorrichtung einen Ladekontaktelementträger mit Ladekontaktelementen aufweist, wobei die Ladekontaktelemente jeweils eine streifenförmige Ladekontaktfläche ausbilden, wobei die Kontaktvorrichtung einen Kontaktelementträger mit Kontaktelementen aufweist, wobei die Kontaktelemente jeweils eine Kontaktfläche ausbilden, die kleiner als die Ladekontaktfläche ausgebildet ist, wobei die Kontaktelemente in der Kontaktposition mit dem Ladekontaktelement jeweils zur Ausbildung von Kontaktpaarungen elektrisch kontaktierbar sind, wobei mittels der Positioniervorrichtung die Kontaktvorrichtung relativ zur Ladekontaktvorrichtung in Längsrichtung der streifenförmigen Ladekontaktflächen und/oder in Querrichtung der streifenförmigen Ladekontaktflächen positionierbar und in die Kontaktposition bringbar ist, wobei die streifenförmigen Ladekontaktflächen in einer Fahrtrichtung des Fahrzeugs angeordnet sind, wobei die Ladekontaktflächen und die Kontaktflächen in der Längsrichtung der Ladekontaktflächen relativ zueinander so angeordnet sind, dass an jeweiligen Längsenden der Ladekontaktflächen ein jeweiliger Berührungskontakt der Ladekontaktflächen mit den Kontaktflächen in einer definierten Reihenfolge bei einer Relativbewegung in der Längsrichtung der Ladekontaktflächen bei einem Zusammenführen wie auch bei einem voneinander Trennen in der Längsrichtung ausbildbar ist.

Derartige Schnellladesysteme bzw. Verfahren sind bereits aus dem Stand der Technik bekannt und werden regelmäßig zur Schnellladung elektrisch angetriebener Fahrzeuge an einer Haltestelle bzw. einem Haltepunkt eingesetzt. Im Nahverkehr eingesetzte elektrisch angetriebene Fahrzeuge, wie beispielsweise Busse, können an den jeweiligen Haltestellen so sukzessive mit elektrischer Energie versorgt werden.

Bei einem aus der DE 10 2015 219 438 A1 bekannten Schnellladesystem wird eine dachförmige Ladekontaktvorrichtung von einer übereinstimmend ausgebildeten Kontaktvorrichtung kontaktiert. Die Ladekontaktvorrichtung weist dabei Ladekontaktelemente auf, die in Art von Leiterstreifen ausgebildet und in einer Fahrtrichtung des Fahrzeugs verlaufend angeordnet sind. Kontaktelemente der Kontaktvorrichtung sind in Art von Bolzen ausgebildet und kontaktieren in der Kontaktposition die Leiterstreifen punktuell. Ein zielgenaues Erreichen der Kontaktposition wird dadurch möglich, dass die Kontaktvorrichtung in die Ladekontaktvorrichtung in einer vertikalen Richtung, relativ bezogen quer zu einer Fahrtrichtung des Fahrzeugs eingeführt wird.

Bei dem aus dem Stand der Technik bekannten Schnelladesystemen ist es jedoch nachteilig, dass es unter ungünstigen Umständen zur Bildung eines Lichtbogens zwischen einem Kontaktelement und einem Ladekontaktelement an einem Längsende eines Ladekontaktelements während eines Ladevorgangs kommen kann. Insbesondere in Abhängigkeit einer Zuladung des Elektrobusses kann der Elektrobus relativ zur Ladekontaktvorrichtung bzw. Kontaktvorrichtung bei einem Halt tiefer oder höher positioniert sein. Auch bei einem Absenken des Elektrobusses auf der Einstiegsseite, um so den Fahrgästen das Einsteigen zu erleichtern, kommt es zu einem Verschieben der Kontaktvorrichtung bzw. der Kontaktelemente relativ zu der Ladekontaktvorrichtung, so dass ein elektrischer Kontakt auch unterbrochen werden kann. Diese Verschiebung kann jedoch dadurch kompensiert werden, dass beispielsweise die Kontaktvorrichtung an einer Querführung gehaltert ist, die diese Verschiebung zulässt.

Werden Ladekontaktelemente mit streifenförmigen Ladekontaktflächen verwendet, ist es im Übrigen auch erforderlich, den Elektrobus in einem dafür vorgesehenen Bereich der Haltestelle relativ bezogen auf eine Fahrtrichtung genau zu positionieren. Eine von einer vorgesehenen Position des Elektrobusses abweichende Position, beispielsweise bei einer Kontaktierung der streifenförmigen Ladekontaktflächen an Längsenden der Ladekontaktelemente mittels der Kontaktelemente, kann eine sichere Kontaktierung bzw. Verbindung von Fahrzeug und stationärer Ladestation verhindern. Bei einem Absenken des Fahrzeugs in oder entgegen einer Fahrtrichtung können Kontaktelemente in oder entgegen der Fahrtrichtung über ein Längsende einer Ladekontaktfläche hinaus bewegt werden, wodurch ein noch nicht eingeleiteter Ladevorgang prinzipiell nicht begonnen oder ein bereits eingeleiteter Ladevorgang unterbrochen werden kann. Bei einer derartigen Unterbrechung einer Kontaktpaarung kann es zur Bildung von Lichtbögen kommen, was ein erhebliches Gefahrenpotential birgt. Weiter ist es auch möglich, dass der Kontaktelementträger durch eine Bewegung des Fahrzeugs in oder entgegen einer Fahrtrichtung, beispielsweise beim Ein- oder Ausfahren in die Haltestelle, bereits mit den streifenförmigen Ladekontaktflächen in Kontakt gelangt oder diese Kontaktpaarung unterbrochen wird. So kann es zur unbeabsichtigten Kontaktierung bzw. Unterbrechung von Kontaktpaarungen kommen, welche Bauelemente des Schnellladesystems oder auch in der Nähe befindliche Personen schädigen können.

Aus der US 2017/080813 A1 ist ein Schnellladesystem zur Ausbildung einer elektrisch leitenden Verbindung zwischen einem Elektrobus und einer stationären Ladestation, mit einer Kontaktvorrichtung, einer Ladekontaktvorrichtung und einer Positioniervorrichtung bekannt. Jeweils streifenförmige Ladekontaktelemente der Ladekontaktvorrichtung verlaufen im Hinblick auf eine Längsrichtung der Ladekontaktelemente orthogonal zu einer Fahrtrichtung des Elektrobusses. Weiter sind Kontaktelemente der Kontaktvorrichtung bezogen auf die Längsrichtung nebeneinander und in einer vertikalen Richtung nach oben versetzt an einem Mast oberhalb des Elektrobusses dergestalt angeordnet, dass in der Längsrichtung zwischen den Ladekontaktflächen und Kontaktflächen der Kontaktelemente eine jeweilige Kontaktpaarung in einer definierten Reihenfolge ausbildbar ist.

Die DE 10 2014 226 357 zeigt ein weiteres Schnellladesystem für ein elektrisch angetriebenes Fahrzeug, welches ebenfalls eine Kontaktvorrichtung sowie eine Ladekontaktvorrichtung umfasst. Gemäß einer Ausführungsform des Schnellladesystems sind Kontaktelemente einer Kontaktvorrichtung unterschiedlich weit von einer in Richtung einer Ladekontaktvorrichtung weisenden Außenseite entfernt. So können bei einem Zusammenführen der Kontaktvorrichtung mit der Ladekontaktvorrichtung die Kontaktelemente zu unterschiedlichen Zeitpunkten mit korrespondierenden Ladekontaktelementen elektrisch kontaktiert werden.

Die US 2016/167532 A1 betrifft ein Schnellladesystem für elektrisch angetriebene Fahrzeuge, mit einem als eine dachförmige Längsschiene ausgebildeten Ladekontaktelementträger mit streifenförmigen Ladekontaktflächen von Ladekontaktelementen. Weiter sind Kontaktelemente einer Kontaktvorrichtung des Schnellladesystems hier bolzenförmig ausgebildet.

Das Video EC "Ride&Charge - fast charging System for electric bus by EC-Engineering" (URL:https://www.youtube.com/watch?v=wFosi9fdM4c) vom 10. November 2017 zeigt einen Bus bei einem Anfahren einer Ladestation. Eine Ladekontaktvorrichtung mit streifenförmigen Ladekontaktelementen ist oberhalb des Busses angeordnet und eine Kontaktvorrichtung wird mittels eines Arms während des Anfahrens in die Ladekontaktvorrichtung eingeführt. Dabei gelangen an einer gemeinsamen Achse federnd gelagerte Kontaktelemente der Kontaktvorrichtung mit den Ladekontaktelementen in Kontakt.

Die Norm "Electric vehicle conductive charging System - Part 1: General requirements", SLOVENSKI STANDARD SIST EN 61851 -1 :2011, offenbart eine Kontaktreihenfolge bei einem Verbinden eines Fahrzeugs mit einer Ladestation.

Die WO2011079215 D17 betrifft ein Schnellladesystem für Busse. Auf einem Dach eines Busses ist eine Längsschiene mit streifenförmigen Ladekontaktflächen von Ladekontaktelementen angeordnet. Weiter sind Kontaktelemente einer auf das Dach absenkbaren Kontaktvorrichtung durch zwei gegenüberliegende Reihen von Bürsten ausgebildet.

Der vorliegenden Erfindung liegt daher die Aufgabe zugrunde, ein Schnellladesystem und ein Verfahren zur Ausbildung einer elektrisch leitenden Verbindung zwischen einem Fahrzeug und einer Ladestation vorzuschlagen, welches einen kostengünstigen Betrieb des Verkehrsmittels und eine sichere Kontaktierung ermöglicht.

Diese Aufgabe wird durch ein Schnellladesystem mit den Merkmalen des Anspruchs 1 und ein Verfahren mit den Merkmalen des Anspruchs 18 gelöst.

Das erfindungsgemäße Schnellladesystem für elektrisch angetriebene Fahrzeuge, insbesondere Elektrobusse oder dergleichen, zur Ausbildung einer elektrisch leitenden Verbindung zwischen einem Fahrzeug und einer stationären Ladestation, umfasst eine Kontaktvorrichtung, eine Ladekontaktvorrichtung und eine Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei die Ladekontaktvorrichtung einen Ladekontaktelementträger mit Ladekontaktelementen aufweist, wobei die Ladekontaktelemente jeweils eine streifenförmige Ladekontaktfläche ausbilden, wobei die Kontaktvorrichtung einen Kontaktelementträger mit Kontaktelementen aufweist, wobei die Kontaktelemente jeweils eine Kontaktfläche ausbilden, die kleiner als die Ladekontaktfläche ausgebildet ist, wobei die Kontaktelemente in der Kontaktposition mit den Ladekontaktelementen jeweils zur Ausbildung von Kontaktpaarungen elektrisch kontaktierbar sind, wobei mittels der Positioniervorrichtung die Kontaktvorrichtung relativ zur Ladekontaktvorrichtung in Längsrichtung der streifenförmigen Ladekontaktflächen und/oder in Querrichtung der streifenförmigen Ladekontaktflächen positionierbar und in die Kontaktposition bringbar ist, wobei die streifenförmigen Ladekontaktflächen in einer Fahrtrichtung des Fahrzeugs angeordnet sind, wobei die Ladekontaktflächen und die Kontaktflächen in der Längsrichtung der Ladekontaktflächen relativ zueinander so angeordnet sind, dass an jeweiligen Längsenden der Ladekontaktflächen ein jeweiliger Berührungskontakt der Ladekontaktflächen mit den Kontaktflächen in einer definierten Reihenfolge bei einer Relativbewegung in der Längsrichtung der Ladekontaktflächen bei einem Zusammenführen wie auch bei einem voneinander Trennen in der Längsrichtung ausbildbar ist, wobei die Kontaktpaarungen für jeweils Leistungskontakte, einen Signalkontakt und einen Schutzkontakt des Schnelladesystems ausbildbar sind, wobei die Kontaktflächen der Kontaktelemente in Fahrtrichtung des Fahrzeugs an dem Kontaktelementträger relativ zueinander versetzt angeordnet sind, wobei die Ladekontaktflächen und die Kontaktflächen in der Längsrichtung der Ladekontaktflächen relativ zueinander so angeordnet sind, dass bei einem derartigen Zusammenführen der Ladekontaktflächen mit den Kontaktflächen in der Längsrichtung der Ladekontaktflächen zuerst der Schutzkontakt und ein Leistungskontakt oder zuerst der Signalkontakt und ein Leistungskontakt ausbildbar ist, wobei hohe Ströme nur dann übertragbar sind, wenn die Kontaktpaarung des Schutzkontaktes und/oder des Signalkontaktes ausgebildet ist.

Mittels dieser Anordnung der Ladekontaktflächen relativ zu den jeweils zugehörigen Kontaktflächen in der Längsrichtung der streifenförmigen Ladekontaktflächen kann folglich eine definierte Reihenfolge der Ausbildung und Trennung von Kontaktpaarungen, bezogen auf die Längsrichtung, ausgebildet werden. Unter der Längsrichtung wird hier die Richtung verstanden, in der die streifenförmigen Ladekontaktflächen im Wesentlichen verlaufen. Da dies eine Fahrtrichtung eines Fahrzeugs sein kann, entspricht die Längsrichtung dann im Wesentlichen einer horizontalen Richtung, wenn der Ladekontaktelementträger horizontal positioniert ist. Gleichwohl kann der Ladekontaktelementträger auch parallel zu einer Fahrbahn eines Fahrzeugs, die auch relativ zu einer Horizontalen geneigt sein kann, positioniert sein. Unter der Querrichtung wird eine vertikale Richtung verstanden, die relativ zu den streifenförmigen Ladekontaktflächen quer bzw. orthogonal verläuft.

So kann bei einem Zusammenführen der Kontaktvorrichtung mit der Ladekontaktvorrichtung in vertikaler und/oder horizontaler Richtung durch die definierte Reihenfolge der Ausbildung der Kontaktpaarungen zunächst eine erste Kontaktpaarung vor einer weiteren Kontaktpaarung ausgebildet werden. Bei den aus dem Stand der Technik bekannten Vorrichtungen kann auch eine zeitlich versetzte Ausbildung von Kontaktpaarungen erfolgen, wobei jedoch diese dann unbeabsichtigt ist bzw. nicht auf die Anordnung der Ladekontaktflächen und Kontaktflächen zurückzuführen ist. Die Anordnung der Kontaktelemente an dem Kontaktelementträger und der Ladekontaktelemente an dem Ladekontaktelementträger stellt somit sicher, dass die Reihenfolge der Ausbildung der Kontaktpaarungen bei dem Zusammenführen von Kontaktelementträger und Ladekontaktelementträger, insbesondere in der Längsrichtung, zwangsläufig immer eingehalten wird und aufgrund der geometrischen Anordnung der Kontaktflächen und Ladekontaktflächen auch nicht ohne Weiteres veränderbar ist, die Anordnung der Kontaktflächen und der Ladekontaktflächen schreibt somit die Reihenfolge der Ausbildung der Kontaktpaarungen bei einer Relativbewegung in Längsrichtung fest. Dies betrifft ein Zusammenführen wie auch ein voneinander Trennen in der Längsrichtung. So kann insbesondere sichergestellt werden, dass bei dem Zusammenführen der jeweiligen Kontaktflächen mit den Ladekontaktflächen und auch bei einem Trennen, welches auch unbeabsichtigt durch beispielsweise eine Neigung des Fahrzeugs erfolgen kann, die Bildung eines Lichtbogens oder einer ungewollten Kontaktierung verhindert wird. Erfindungsgemäß erfolgt nur dann eine Übertragung hoher Ströme erfolgt, wenn bestimmte Kontaktpaarungen ausgebildet sind. Es werden Schutzkontakte oder Signalkontakte vor einer Ausbildung von Kontaktpaarungen für Leistungskontakte ausgebildet, oder durch die betreffende Anordnung kann sichergestellt werden, dass Leistungskontakte stromlos sind, wenn eine anordnungsbedingte Trennung der Leistungskontakte erfolgt. Eventuelle Schäden an dem Schnellladesystem oder Gefährdungen von Personen können so ohne großen Aufwand vermieden werden.

Erfindungsgemäß sind die Kontaktpaarungen für jeweils Leistungskontakte, einen Signalkontakt und einen Schutzkontakt des Schnellladesystems ausbildbar. Dabei muss es sich um zumindest zwei Kontaktpaarungen von Leistungskontakten handeln, damit ein Ladestrom zwischen der Kontaktvorrichtung und der Ladekontaktvorrichtung übertragen werden kann. Der Ladestrom kann ein Gleichstrom oder ein Wechselstrom sein. Auch können weitere Kontaktpaarungen zur Übertragung des Ladestroms vorgesehen sein, um über die jeweiligen Kontaktflächen hohe Ströme in kurzer Zeit übertragen zu können. Weiter wird über eine größere Anzahl von Kontaktpaarungen sichergestellt, dass selbst im Falle einer Unterbrechung einer einzelnen Kontaktpaarung dennoch ein Ladestrom fließen kann. Der Schutzkontakt kann dazu dienen, dass das Fahrzeug mit Masse bzw. einem Nullpotential zu verbinden. Der Signalkontakt kann dazu dienen, Signale und Daten zwischen dem Fahrzeug und dem Schnellladesystem bzw. einer Ladestation auszutauschen. Insbesondere kann vorgesehen sein, dass erst ein Strom über die Kontaktpaarungen der Leistungskontakte fließt, wenn die Kontaktpaarung für den Signalkontakt und den Schutzkontakt ausgebildet wurde. Umgekehrt kann ein über die Kontaktpaarungen der Leistungskontakte fließender Ladestrom unmittelbar abgeschaltet werden, wenn der Signalkontakt und/oder der Schutzkontakt unterbrochen wird. Somit kann dann sichergestellt werden, dass eine unbeabsichtigte Verschiebung eines Kontaktelements an einer Ladekontaktfläche zunächst zu einer Trennung des Signalkontaktes führt, bevor eine Kontaktpaarung eines Leistungskontaktes getrennt wird. Dies stellt sicher, dass der Leistungskontakt dann immer stromlos ist, wenn der Signalkontakt und/oder der Schutzkontakt getrennt ist.

Erfindungsgemäß sind die Ladekontaktflächen und die Kontaktflächen in der Längsrichtung relativ zueinander so angeordnet, dass zuerst der Schutzkontakt und ein Leistungskontakt oder zuerst der Signalkontakt und ein Leistungskontakt ausgebildet wird. Auch hier kann durch die fehlende Ausbildung des Schutzkontaktes oder des Signalkontakt jeweils ein Ladevorgang über den Leistungskontakt, beispielsweise durch stromlos Schalten des Leistungskontaktes, und damit eine Bildung eines Lichtbogens verhindert werden.

Weiter können die Ladekontaktflächen und die Kontaktflächen in der Längsrichtung relativ zueinander so angeordnet sein, dass zuerst der Schutzkontakt, nachfolgend die Leistungskontakte und weiter nachfolgend der Signalkontakt ausbildbar sind. Dies gilt für eine Herstellung eines elektrischen Kontakts durch Positionierung der Kontaktvorrichtung und der Ladekontaktvorrichtung in der Kontaktposition und umgekehrt für deren Trennung, dadurch dass zuerst das Signalkontakt, nachfolgend die Leistungskontakte und weiter nachfolgend der Schutzkontakt getrennt wird. Dabei ist zu beachten, dass die Anordnung der Ladekontaktflächen und oder der Kontaktflächen in der Längsrichtung entsprechend jeweils an den Längsenden der Ladekontaktflächen ausgebildet ist. So kann sichergestellt werden, dass bei einem Zusammenführen von Kontaktvorrichtung und Ladekontaktvorrichtung in Längsrichtung bzw. Fahrtrichtung eines Fahrzeugs zunächst eine sichere Kontaktierung und nachfolgend bei einem Trennen eine sichere Trennung möglich ist.

Die Längsenden der Ladekontaktfläche zur Ausbildung des Schutzkontaktes können die Längsenden der übrigen Ladekontaktflächen jeweils in der Längsrichtung überragen. So kann dann in jedem Fall immer sichergestellt werden, dass bei einem Zusammenführen zuerst bzw. bei einem Trennen zuletzt die Kontaktpaarung für den Schutzkontakt ausgebildet wird, wodurch eine erhöhte elektrischer Sicherheit erzielt werden kann.

Die Längsenden der Ladekontaktfläche zur Ausbildung des Leistungskontaktes können die Längsenden der Ladekontaktfläche zur Ausbildung des Signalkontaktes jeweils in der Längsrichtung überragen. Demnach kann weiter sichergestellt werden, dass die Kontaktpaarung des Signalkontaktes beim Zusammenführen erst nach der Herstellung der Kontaktpaarungen für die Leistungskontakte ausgebildet bzw. beim Trennen davor getrennt wird. Wenn ein geschlossener Signalkontakt ein Aufschalten eines Stroms auf die jeweiligen Kontaktpaarungen der Leistungskontakte bewirkt, ist dann immer sichergestellt, dass die Leistungskontakte nur mit einem Strom beaufschlagt werden, wenn tatsächlich auch ein Signalkontakt hergestellt ist. Da bei einer unbeabsichtigten Verschiebung, beispielsweise durch Neigung eines Fahrzeugs in Längsrichtung bzw. Fahrtrichtung, der Kontaktelemente der Kontaktpaarungen der Leistungskontakte folglich auch eine Verschiebung der Kontaktelemente der Kontaktpaarung des Signalkontakts erfolgt, ist dann sichergestellt, dass das Signalkontakt vor einer Trennung des Leistungskontaktes geöffnet bzw. getrennt wird. Eine Ausbildung von Lichtbögen kann so sicher vermieden werden.

Die Ladekontaktfläche zur Ausbildung des Schutzkontaktes kann länger ausgebildet sein, als die Ladekontaktfläche zur Ausbildung des Leistungskontaktes, wobei die Ladekontaktfläche zur Ausbildung des Leistungskontaktes länger ausgebildet sein kann, als die Ladekontaktfläche zur Ausbildung des Signalkontaktes. Insbesondere kann so bei einem Zusammenführen und einem Trennen der Kontaktvorrichtung mit der Ladekontaktvorrichtung eine definierte Reihenfolge zur Herstellung von Kontaktpaarungen sicher eingehalten werden.

Die Ladekontaktelemente können als Leiterstreifen ausgebildet sein, wobei die Leiterstreifen relativ zueinander parallel und in Richtung einer Längsachse des Ladekontaktelementträgers angeordnet sein können. Insbesondere können die Leiterstreifen dann in der Längsrichtung bzw. in einer horizontalen Richtung, welche im Wesentlichen einer Fahrtrichtung des Fahrzeugs entspricht, angeordnet sein. Beispielsweise können die Leiterstreifen über 1 m lang sein, so dass ein Fahrzeugs innerhalb eines Bereichs an einer Haltestelle anhalten kann. So können die Ladekontaktelemente eine vergleichsweise große, kontaktierbare Fläche für die Kontaktelemente ausbilden. Auch ist ein Leiterstreifen dann einfach herzustellen, beispielsweise durch die Verwendung eines Halbzeugs als Leiterstreifen.

Die Kontaktelemente können in zumindest einer Ebene angeordnet sein, die in der Kontaktposition orthogonal zu der Längsachse verlaufen kann.

Damit ist dann sichergestellt, dass die Kontaktelemente in der Längsrichtung bzw. Fahrtrichtung gleichzeitig in den Ladekontaktelementträger eingeführt oder herausbewegt werden können. Ein von der orthogonalen Anordnung der Ebene abweichender Versatz kann sich bei einem Positionierungsfehler des Fahrzeugs an der Haltestelle ergeben, wobei dann vorgesehen sein kann, dass anhand der Gestalt der Kontaktvorrichtung und der Ladekontaktvorrichtung eine Erzielung der Kontaktposition nicht möglich oder nur innerhalb einer geringen Winkeltoleranz möglich ist.

Die Kontaktelemente können in einer weiteren Ebene angeordnet sein, die in der Kontaktposition orthogonal zu der Längsachse verläuft, wobei die Ebenen dann in Richtung der Längsachse voneinander beabstandet sein können, wobei in der Ebene und in der weiteren Ebene jeweils Kontaktelemente zur Ausbildung von Leistungskontakten angeordnet sein können. Erfindungsgemäß sind die Kontaktelemente in Richtung der Längsachse bzw. einer Fahrtrichtung des Fahrzeugs an dem Kontaktelementträger relativ zueinander versetzt angeordnet, um ebenfalls durch diese Anordnung eine gewünschte Relativanordnung zu den Längsenden der Ladekontaktflächen zur Erzielung einer definierten Reihenfolge bei einer Kontaktierung oder Trennung zu erhalten.

Die Kontaktelemente können Bolzenförmig ausgebildet sein. Weiter können die Kontaktelemente am Kontaktelementträger federnd gelagert sein. Die Kontaktelemente sind so besonders einfach herstellbar, wobei die federnde Lagerung durch eine einfache Druckfeder innerhalb oder an dem Kontaktelement ausgeführt werden kann. Infolge dessen kann so ein punktueller Kontakt mit einem Ladekontaktelement unter einer Federvorspannung ausgebildet werden. Weiter kann es auch vorgesehen sein, dass beispielsweise für eine Kontaktpaarung für einen Leistungskontakt, eine Mehrzahl von Kontaktelementen, also mehrere Kontaktpaarungen vorgesehen sind. Vorzugsweise können zwei Kontaktelemente für jeweils eine Phase bzw. einen Leistungskontakt vorgesehen sein.

Folglich kann die Kontaktfläche auch punktförmig ausgebildet sein. Insbesondere wenn bolzenförmige Kontaktelemente zum Einsatz kommen kann dies der Fall sein. Prinzipiell ist es jedoch auch möglich andere Formen von Kontaktflächen, je nach Gestalt der Kontaktelemente, auszubilden. Wesentlich ist jedoch, dass die jeweilige Kontaktfläche immer kleiner als die kleinste bzw. in Längsrichtung kürzeste Ladekontaktfläche ausgebildet ist.

Die Kontaktvorrichtung und die Ladekontaktvorrichtung können, jeweils eine Hochachse aufweisen, wobei die jeweiligen Hochachsen in der Kontaktposition fluchten können. Die Hochachsen können relativ zu einer Fahrbahn vertikal verlaufen, so dass die Kontaktvorrichtung und die Ladekontaktvorrichtung in vertikaler Richtung zusammengeführt werden können. Prinzipiell ist es auch möglich, dass die Kontaktvorrichtung und die Ladekontaktvorrichtung ergänzend auch in horizontaler Richtung zusammengeführt werden können. Dies kann insbesondere davon abhängig sein, ob ein Fahrzeug beim Zusammenführen oder Trennen der Kontaktvorrichtung und der Ladekontaktvorrichtung bewegt wird.

Weiter kann eine Führungsvorrichtung bei einem Zusammenführen von Kontaktvorrichtung und Ladekontaktvorrichtung die jeweiligen Hochachsen einer gemeinsamen Flucht positionieren. Das heißt, wenn die Hochachsen der Kontaktvorrichtung und der Ladekontaktvorrichtung nicht fluchtend relativ zueinander angeordnet sind, kann der Berührungskontakt auch nicht hergestellt werden. Erst wenn die Führungsvorrichtung die Kontaktvorrichtung und die Ladekontaktvorrichtung relativ zueinander so positioniert bzw. ausgerichtet hat, dass die jeweiligen Hochachsen fluchten bzw. in einer gemeinsamen Flucht liegen, kann der Berührungskontakt hergestellt werden.

Vorteilhaft ist es daher, wenn das Schnellladesystem eine Führungsvorrichtung zur Führung der Kontaktvorrichtung oder der Ladekontaktvorrichtung in die Kontaktposition aufweist, wobei die Führungsvorrichtung so ausgebildet sein kann, dass bei einem Zusammenführung von Kontaktvorrichtung und Ladekontaktvorrichtung ein Berührungskontakt der Kontaktelemente mit den Ladekontaktelementen vor einem Erreichen der Kontaktposition unterbunden wird. Mittels der Führungsvorrichtung kann dann folglich verhindert werden, dass bei einem Zusammenführen von Kontaktvorrichtung und Ladekontaktvorrichtung der Berührungskontakt der Kontaktelemente mit der Ladekontaktvorrichtung vor dem Erreichen der Kontaktposition überhaupt möglich ist. Der Berührungskontakt kann dann erst in der Kontaktposition ausgebildet bzw. hergestellt werden. Die Kontaktelemente können nicht über größere Strecken an der Ladekontaktvorrichtung bzw. deren Oberfläche entlang gleiten, wodurch ein unerwünschter Abrieb der Kontaktelemente bzw. der Oberfläche der Ladekontaktvorrichtung vermieden wird.

Die Kontaktvorrichtung kann auf einem Fahrzeugdach und die Ladekontaktvorrichtung an einer stationären Ladestation oder umgekehrt anordbar sein. Beispielsweise kann es sich dabei um ein Fahrzeugdach eines Elektrobusses oder auch eines Straßenbahnwagens handeln. Dabei kann beispielsweise auch vorgesehen sein, die Kontaktvorrichtung oder die Ladekontaktvorrichtung so auf dem Fahrzeugdach zu positionieren, dass diese in Fahrtrichtung auf einer Fahrerseite des Fahrzeugdaches angeordnet ist. Einem Fahrer des Fahrzeuges wird so eine Positionierung der Kontaktvorrichtung bzw. der Ladekontaktvorrichtung wesentlich vereinfacht, da diese bzw. deren Lage in Blickrichtung des Fahrers liegt.

Der Ladekontaktelementträger kann eine Aufnahmeöffnung für den Kontaktelementträger ausbilden, wobei der Kontaktelementträger in die Aufnahmeöffnung des Ladekontaktelementträgers einsetzbar sein kann. Dabei kann die Aufnahmeöffnung vorzugsweise V-förmig ausgebildet sein. Bei einer Relativabweichung des Kontaktelementträgers bei einem Zusammenführen von Kontaktvorrichtung und Ladekontaktvorrichtung zur Aufnahmeöffnung bewirkt dann die V-förmige Ausbildung der Aufnahmeöffnung eine Zentrierung des Kontaktelementträgers bzw. des Ladekontaktelementträgers. Umgekehrt kann der Kontaktelementträger eine Aufnahmeöffnung für den Ladekontaktelementträger ausbilden, wobei der Ladekontaktelementträger dann in die Aufnahmeöffnung des Kontaktelementträgers einsetzbar sein kann. Die Aufnahmeöffnung kann dann auch hier vorzugsweise V-förmig ausgebildet sein, wobei dann innerhalb der V-förmigen Aufnahmeöffnung die Kontaktelemente angeordnet sein können.

Die Aufnahmeöffnung kann bei einem Zusammenführen von Kontaktelementträger und Ladekontaktelementträger eine Führung für den Kontaktelementträger oder den Ladekontaktelementträger ausbilden. Eventuelle Lageabweichungen des Fahrzeugs bei einem Halt an einer Haltestelle von einer vorgesehenen Halteposition können so durch die durch die Aufnahmeöffnung bewirkte Führung des Kontaktelementträgers bzw. des Ladekontaktelementträgers in die Kontaktposition leicht ausgeglichen werden.

Besonders vorteilhaft ist es, wenn der Ladekontaktelementträger als eine in eine Fahrtrichtung des Fahrzeugs anordbare, dachförmige Längsschiene ausgebildet ist. Die Ladekontaktelemente können dann an einer Unterseite der dachförmigen Längsschiene angeordnet sein, so dass die Ladekontaktelemente nicht unmittelbar Witterungseinflüssen ausgesetzt sind. Auch kann die dachförmige Längsschiene vergleichsweise lang ausgebildet sein, so dass eine genau Positionierung des Fahrzeugs an einer Haltestelle nicht mehr notwendig ist. Auch kann die dachförmige Längsschiene an ihren Enden vorzugsweise offen ausgebildet sein, so dass der Kontaktelementträger auch in Fahrtrichtung in die dachförmige Längsschiene eingeführt bzw. herausgezogen werden kann. Wenn der Ladekontaktelementträger an einem Fahrzeug angeordnet werden soll, kann vorgesehen sein, den Ladekontaktelementträger als eine in einer Fahrtrichtungsfahrzeugs anordbare stegförmige Erhöhung auszubilden.

Die Positioniervorrichtung kann einen Pantographen oder eine Schwinge umfassen, mittels der die Kontaktvorrichtung in vertikaler Richtung relativ zur Ladekontaktvorrichtung positionierbar ist. Bei einer Schwinge kann ein ergänzendes Koppelgetriebe vorgesehen sein, welches die Kontaktvorrichtung relativ zur Ladekontaktvorrichtung oder umgekehrt stabilisiert bzw. in der betreffenden Richtung ausrichtet. Demnach kann vorgesehen sein, die Kontaktvorrichtung oder die Ladekontaktvorrichtung an dem Pantographen oder der Schwinge anzuordnen. Weiter kann die Positioniervorrichtung an einem Fahrzeugdach oder beispielsweise an einem Mast einer Ladestation oder Haltestelle, Brücke oder Unterführung angeordnet sein. Ein Pantograph oder eine Schwinge bzw. ein entsprechender mechanischer Antrieb ist besonders einfach und kostengünstig herstellbar.

Bei dem erfindungsgemäßen Verfahren zur Ausbildung einer elektrisch leitenden Verbindung zwischen einem Fahrzeug und einer stationären Ladestation, insbesondere für ein Schnellladesystem für elektrisch angetriebene Fahrzeuge, wie Elektrobusse oder dergleichen, umfasst das Schnellladesystem eine Kontaktvorrichtung, eine Ladekontaktvorrichtung und eine Positioniervorrichtung, wobei mit der Kontaktvorrichtung die Ladekontaktvorrichtung in einer Kontaktposition elektrisch kontaktiert wird, wobei die Ladekontaktvorrichtung einen Ladekontaktelementträger mit Ladekontaktelementen aufweist, wobei die Ladekontaktelemente jeweils eine streifenförmige Ladekontaktfläche ausbilden, wobei die Kontaktvorrichtung einen Kontaktelementträger mit Kontaktelementen aufweist, wobei die Kontaktelemente jeweils eine Kontaktfläche ausbilden, die kleiner als die Ladekontaktflächen ausgebildet ist, wobei die Kontaktelemente in der Kontaktposition mit den Ladekontaktelementen jeweils zur Ausbildung von Kontaktpaarungen elektrisch kontaktiert werden, wobei mittels der Positioniervorrichtung die Kontaktvorrichtung relativ zur Ladekontaktvorrichtung in Längsrichtung der streifenförmigen Ladekontaktflächen und/oder in Querrichtung der streifenförmigen Ladekontaktflächen positioniert und in die Kontaktposition gebracht wird, wobei die streifenförmigen Ladekontaktflächen in einer Fahrtrichtung des Fahrzeugs angeordnet sind, wobei zumindest eine Ladekontaktfläche mit einer Kontaktfläche an einem Längsende der Ladekontaktfläche kontaktiert wird, wobei an jeweiligen Längsenden der Ladekontaktflächen ein jeweiliger Berührungskontakt der Ladekontaktflächen mit den Kontaktflächen in einer definierten Reihenfolge bei einem Zusammenführen wie auch bei einem voneinander Trennen in der Längsrichtung ausgebildet wird, wobei die Kontaktpaarungen für jeweils Leistungskontakte, einen Signalkontakt und einen Schutzkontakt des Schnelladesystems ausgebildet werden, wobei die Kontaktflächen der Kontaktelemente in Fahrtrichtung des Fahrzeugs an dem Kontaktelementträger relativ zueinander versetzt angeordnet sind, wobei die Ladekontaktflächen und die Kontaktflächen in der Längsrichtung der Ladekontaktflächen relativ zueinander so angeordnet sind, dass bei einem Zusammenführen der Ladekontaktflächen mit den Kontaktflächen in der Längsrichtung der Ladekontaktflächen zuerst ein Schutzkontakt, nachfolgend ein Leistungskontakt und weiter nachfolgend ein Signalkontakt ausgebildet wird, wobei eine Übertragung hoher Ströme nur dann erfolgt, wenn die Kontaktpaarung des Schutzkontaktes und/oder des Signalkontaktes ausgebildet ist. Hinsichtlich der vorteilhaften Wirkungen des erfindungsgemäßen Verfahrens wird auf die Vorteilsbeschreibung des erfindungsgemäßen Schnellladesystems verwiesen.

Bei einem Trennen der Ladekontaktflächen und der Kontaktflächen kann zuerst der Signalkontakt, nachfolgend der Leistungskontakt und weiter nachfolgend der Schutzkontakt getrennt werden.

Erfindungsgemäß sind die Ladekontaktflächen und die Kontaktflächen in der Längsrichtung relativ zueinander so angeordnet, dass an jeweiligen Längsenden der Ladekontaktflächen ein jeweiliger Berührungskontakt der Ladekontaktflächen mit den Kontaktflächen in einer definierten Reihenfolge ausgebildet wird.

Weitere vorteilhafte Ausführungsformen des Verfahrens ergeben sich aus den auf den Anspruch 1 jeweils rückbezogenen Unteransprüchen. Nachfolgend werden bevorzugte Ausführungsformen der Erfindung unter Bezugnahme auf die beigefügten Zeichnungen näher erläutert.

Es zeigen:
- **Fig. 1**: eine Ausführungsform eines Schnellladesystems in einer Seitenansicht;
- **Fig. 2**: das Schnellladesystem in einer Vorderansicht;
- **Fig. 3**: eine Ladekontaktvorrichtung des Schnellladesystems in einer perspektivischen Ansicht;
- **Fig. 4**: die Ladekontaktvorrichtung in einer Querschnittansicht;
- **Fig. 5**: eine schematische Draufsicht auf eine Kontaktvorrichtung und eine Ladekontaktvorrichtung eines Schnellladesystems in einer ersten Kontaktposition;
- **Fig. 6**: eine schematische Draufsicht auf die Kontaktvorrichtung und die Ladekontaktvorrichtung aus **Fig. 5** in einer zweiten Kontaktposition;
- **Fig. 7**: eine schematische Draufsicht auf eine weitere Kontaktvorrichtung und eine weitere Ladekontaktvorrichtung eines weiteren Schnellladesystems in einer ersten Kontaktposition;
- **Fig. 8**: eine schematische Draufsicht der Kontaktvorrichtung und der Ladekontaktvorrichtung des Schnellladesystems aus **Fig. 7** in einer zweiten Kontaktposition.

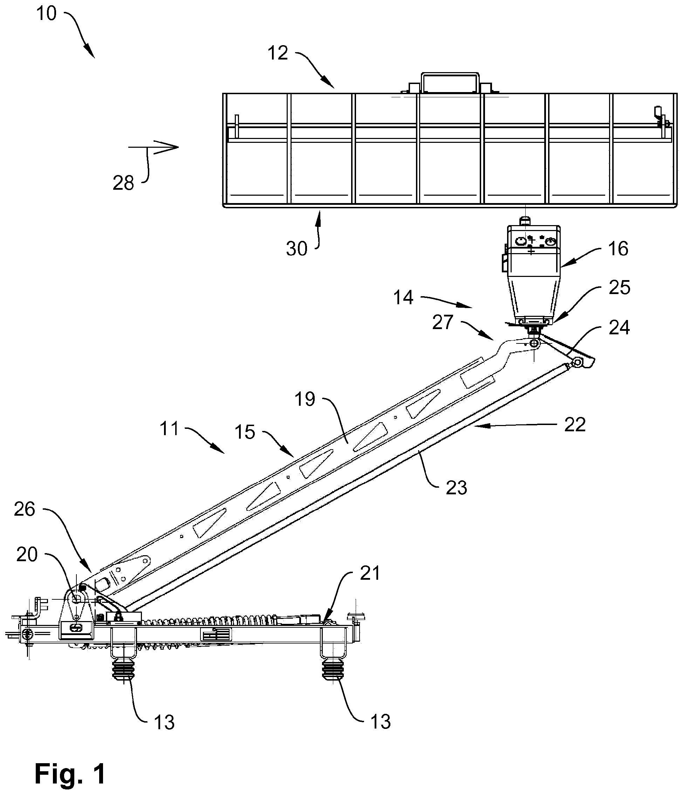

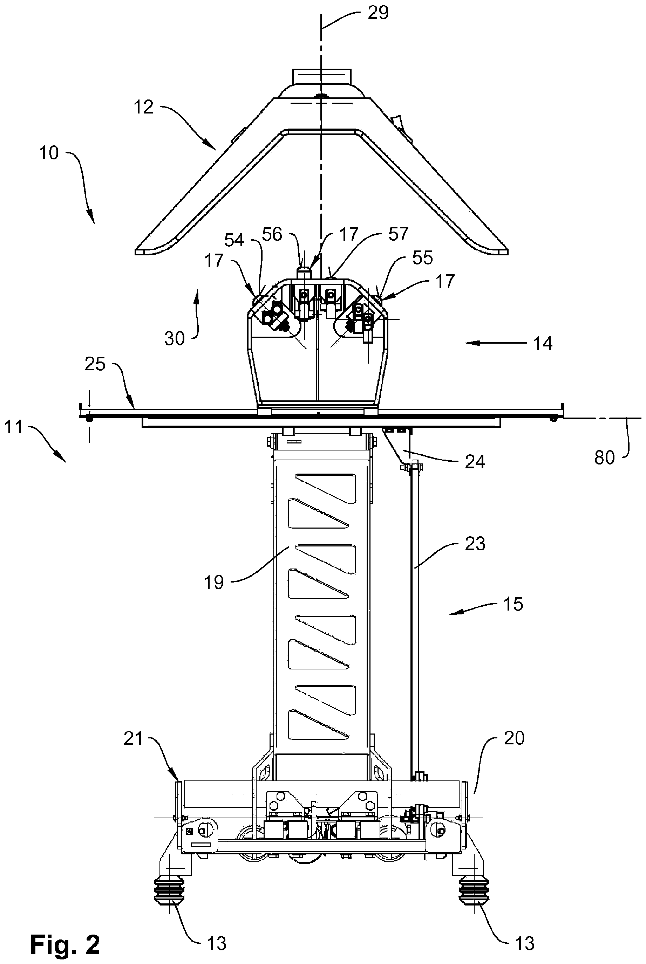

Eine Zusammenschau der **Fig. 1** und **2** zeigt ein Schnellladesystem 10, gebildet aus einer Kontaktvorrichtung 11 und einer Ladekontaktvorrichtung 12. Eine Lagervorrichtung ist hier der Einfachheit halber nicht dargestellt, kann jedoch vorhanden sein. Die Kontaktvorrichtung 11 ist über elektrisch isolierte Füße 13 auf einem Dach eines hier nicht näher dargestellten Fahrzeugs bzw. Elektrobusses befestigt. Die Ladekontaktvorrichtung 12 ist mittels einer hier nicht näher dargestellten Aufhängevorrichtung oberhalb des Elektrobusses im Bereich einer Haltestelle des Elektrobusses aufgehängt. Die Kontaktvorrichtung 11 umfasst einen Kontaktelementträger 14, mit der die Ladekontaktvorrichtung 12 kontaktierbar ist sowie eine Positioniervorrichtung 15, mit der der Kontaktelementträger 14 relativ zur Ladekontaktvorrichtung 12 positioniert werden kann. Der Kontaktelementträger 14 umfasst weiter einen Korpus 16 mit Kontaktelementen 17, die mit Ladekontaktelementen 18 der Ladekontaktvorrichtung 12 kontaktiert werden können. Die Positioniervorrichtung 15 weist in der hier gezeigten Ausführungsform eine Schwinge 19 auf, welche über ein Drehlager 20 an einem Befestigungsrahmen 21 der Kontaktvorrichtung 11 verschwenkt werden kann. Weiter ist ein Koppelgetriebe 22 der Positioniervorrichtung 15 vorgesehen, bei dem ein Stab 23 des Koppelgetriebes 22 an einem Hebel 24 einer Querführung 25 der Positioniervorrichtung 15 angeschlossen ist. Bei einem Verschwenken der Schwinge 19 um das Drehlager 20 an einem unteren Ende 26 der Schwinge 19 wird über das Koppelgetriebe 22 die an einem oberen Ende 27 der Schwinge 19 angeordnete Querführung 25 über das Koppelgetriebe 22 stets in einer horizontalen Lage gehalten. Demnach kann der Korpus 16 bei dem Verschwenken auch nicht relativ zu einer horizontalen Ebene 80 verkippen. Der Kontaktelementträger 14 ist an der Querführung 25 quer zu einer hier mit dem Pfeil 28 angedeuteten Fahrtrichtung frei verschiebbar angeordnet. So kann sichergestellt werden, dass der Kontaktelementträger 14 bei einem Zusammenführen von Kontaktelementträger 14 und Ladekontaktvorrichtung 12 sich relativ zu einer Hochachse 29 der Ladekontaktvorrichtung 12 frei ausrichten kann, wenn der Kontaktelementträger 14 nicht unmittelbar fluchtend mit der Hochachse 29 bei einem Halt des Elektrobusses positioniert wurde. Auch nach einem Kontaktieren der Ladekontaktvorrichtung 12 durch Positionieren des Kontaktelementträgers 14 in einer Aufnahmeöffnung 30 der Ladekontaktvorrichtung 12 kann der Elektrobus durch ein einseitiges Absenken relativ zur Hochachse 29 gegebenenfalls verkippt werden, wobei dann der Kontaktelementträger 14 quer zur Fahrtrichtung des Elektrobusses an der Querführung 25 frei verschoben werden kann. Insbesondere wird bei dem Absenken die Schwinge 19 um einen nicht dargestellten Winkel relativ zur Hochachse 29 verkippt.

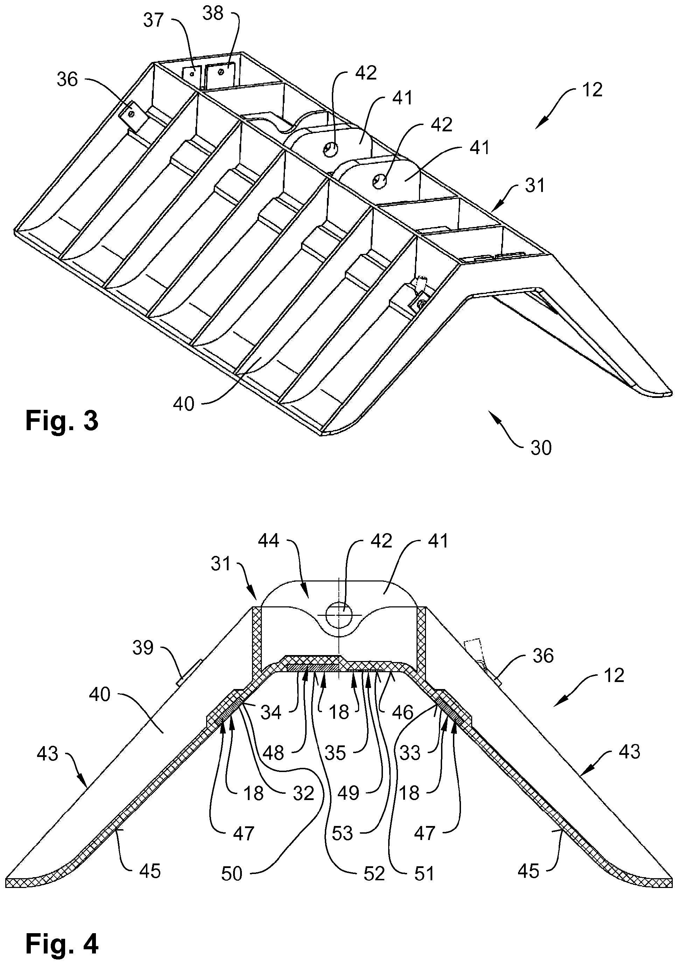

Eine Zusammenschau der **Fig. 3** und **4** zeigt die Ladekontaktvorrichtung 12, welche im Wesentlichen aus einem Ladekontaktelementträger 31 aus Kunststoffmaterial und den Ladekontaktelementen 18 ausgebildet ist. Die Ladekontaktelemente 18 sind ihrerseits jeweils als Leiterstreifen 32, 33, 34 und 35 ausgebildet und verlaufen in Längsrichtung des Ladekontaktelementträgers 31. Die Leiterstreifen 32 und 33 dienen zur Übertragung eines Ladestroms, wobei der Leiterstreifen 34 einen Schutzleiter und der Leiterstreifen 35 eine Steuerleitung repräsentiert. Im Übrigen sind Kontaktfahnen 36 bis 39 zum Anschluss an hier nicht näher dargestellte Leitungen vorgesehen. Der Ladekontaktelementträger 31 ist im Wesentlichen einstückig ausgebildet und weist unter anderem Verstärkungsrippen 40 sowie Befestigungsrippen 41 mit Durchgangsöffnungen 42 zur Aufhängung des Ladekontaktelementträgers 31 an einem hier nicht näher dargestellten Mast oder Ähnlichem auf. Die Aufnahmeöffnung 30 ist V-förmig ausgebildet, derart, dass zwei symmetrische Schenkel 34 über einen horizontalen Steg 44 miteinander verbunden sind. Die Befestigungsrippen 41 bilden unter anderem den Steg 44, und die Verstärkungsrippen 40 die Schenkel 43 aus. Innerhalb der Aufnahmeöffnung 30 bildet die Ladekontaktvorrichtung 12 Anlageflächen 45 und 46 für den Kontaktelementträger 14 aus. Innerhalb der Anlageflächen 45 an den Schenkeln 43 sind jeweils Ausnehmungen 47 zur flächenbündigen Aufnahme der Leiterstreifen 32 bzw. 33 ausgebildet, wobei innerhalb der Anlagefläche 46 des Stegs 44 Ausnehmungen 48 und 49 zur flächenbündigen Aufnahme der Leiterstreifen 34 bzw. 35 ausgebildet sind. Insbesondere bilden die Ladekontaktelemente 18 streifenförmige Ladekontaktflächen 50, 51, 52 und bzw. 53 aus, die mit Kontaktflächen 54, 55, 56 bzw. 57 der Kontaktelemente 17 zur Ausbildung jeweils einer hier nicht dargestellten Kontaktpaarung elektrisch kontaktierbar sind. Weiter sind die Ladekontaktflächen 50, 51, 52 und 53 und die Kontaktflächen 54, 55, 56 und 57 in der Längsrichtung, die hier mit dem Pfeil 28 angedeutet ist, relativ zueinander so angeordnet, dass an jeweiligen, hier nicht dargestellten Längsenden der Ladekontaktflächen 50, 51, 52 bzw. 53 ein jeweiliger Berührungskontakt der Ladekontaktflächen 50, 51, 52 bzw. 53 mit den zugehörigen Kontaktflächen 54, 55, 56 bzw. 57 in einer definierten Reihenfolge ausbildbar und/oder trennbar ist.

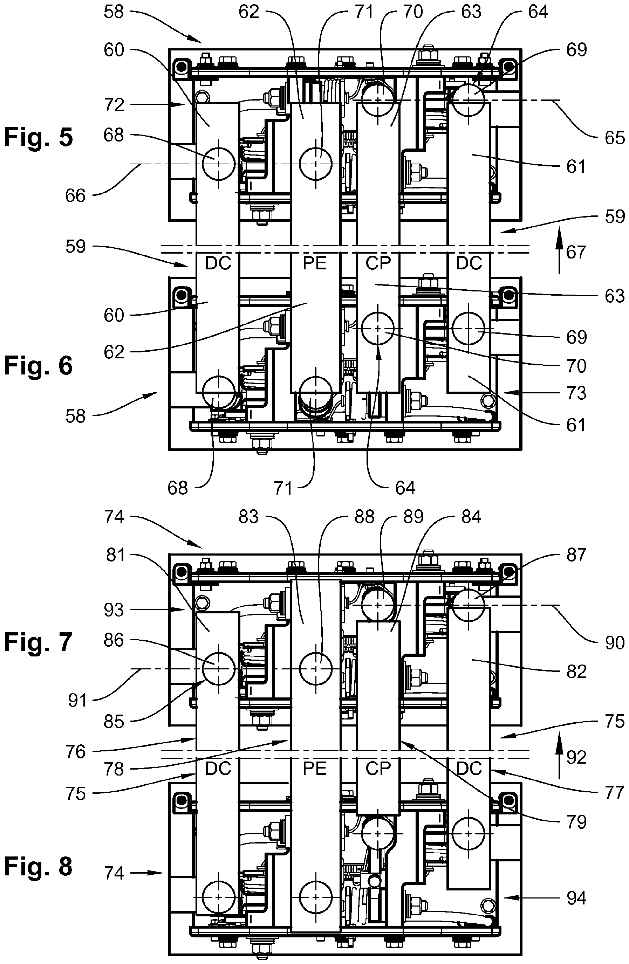

Die **Fig. 5** und **6** zeigen eine schematische Darstellung einer Kontaktvorrichtung 58 und einer Ladekontaktvorrichtung 59 eines nicht näher dargestellten Schnellladesystems in einer Draufsicht. Die Ladekontaktvorrichtung 59 bildet hier vier Ladekontaktflächen 60, 61, 62 und 63 aus. Die Kontaktvorrichtung 58 umfasst eine Anzahl Kontaktelemente 64, die in einer Ebene 65 sowie in einer weiteren Ebene 66 relativ zu einer hier mit einem Pfeil 67 dargestellten Fahrtrichtung bzw. Längsrichtung der Ladekontaktflächen 60, 61, 62 und 63, orthogonal angeordnet sind. Die Ebene 65 und die weitere Ebene 66 sind dabei in einem Abstand relativ zueinander angeordnet und damit auch die betreffenden Kontaktelemente 64. Die Kontaktelemente 64 bilden jeweils selbst Kontaktflächen 68, 69, 70 und 71 aus. Die Ladekontaktfläche 60 ist mit der Kontaktfläche 68 und die Ladekontaktfläche 61 mit der Kontaktfläche 69 zur Ausbildung jeweils eines Leistungskontaktes zur Übertragung eines Ladestroms kontaktiert. Im vorliegenden Fall handelt es sich bei dem Ladestrom um einen Gleichstrom. Die Ladekontaktfläche 63 ist mit der Kontaktfläche 70 zur Ausbildung eines Signalkontaktes und die Ladekontaktfläche 62 mit der Kontaktfläche 71 zur Ausbildung eines Schutzkontaktes kontaktiert.

In der **Fig. 5** ist an einem Längsende 72 der Ladekontaktflächen 60, 61, 62 und 63 die Kontaktfläche 69 und 70 soweit verschoben, dass hier leicht der ausgebildete Signalkontakt und Leistungskontakt unterbrochen werden kann, was jedoch nicht zur Ausbildung eines Lichtbogens am Leistungskontakt zwischen der Kontaktfläche 69 und der Ladekontaktfläche 61 führen kann, da dann auch der Signalkontakt unterbrochen wird, was zur Abschaltung des Ladesroms führt. An dem in der **Fig. 6** dargestellten gegenüberliegenden Längsende 73 der Ladekontaktflächen 60, 61, 62 und 63 sind die Kontaktflächen 68 und 71 entsprechend an den Ladekontaktflächen 60 und 62 positioniert, sodass hier auch an dem gegenüberliegenden Längsende 73 eine Bildung eines Lichtbogens im Wesentlichen ausgeschlossen werden kann.

Die **Fig. 7** und **8** zeigen ebenfalls eine schematische Darstellung einer Kontaktvorrichtung 74 und einer Ladekontaktvorrichtung 75 eines hier nicht weiter dargestellten Schnellladesystems in einer Draufsicht. Die Ladekontaktvorrichtung 75 umfasst Ladekontaktelemente 76, 77, 78 und 79, die jeweils eine Ladekontaktfläche 81, 82, 83 bzw. 84 ausbilden. Die Kontaktvorrichtung 74 umfasst eine Anzahl Kontaktelemente 85, die ihrerseits Kontaktflächen 86, 87, 88 und 89 ausbilden. Die Kontaktelemente 85 sind in einer Ebene 90 bzw. in einer weiteren Ebene 91 angeordnet, wobei die Ebenen 90 und 91 orthogonal relativ zu einer Längsrichtung, die hier mit einem Pfeil 92 entsprechend einer Fahrtrichtung gekennzeichnet ist, angeordnet sind. Die Ladekontaktflächen 80, 81, 82 und 83 sind an einem Längsende 93 und an einem gegenüberliegenden Längsende 94 unterschiedlich lang ausgebildet. Insbesondere ist die Ladekontaktfläche 83 zur Ausbildung des Schutzkontaktes zusammen mit der Kontaktfläche 88 länger ausgebildet als die Ladekontaktflächen 81 und 82 zur Ausbildung des Leistungskontakts zusammen mit dem Kontaktflächen 86 bzw. 87, wobei die Ladekontaktflächen 81 und 82 zur Ausbildung des Leistungskontaktes jeweils länger ausgebildet sind als die Ladekontaktfläche 84 zur Ausbildung des Signalkontaktes zusammen mit der Kontaktfläche 89.

Wie in den **Fig. 7** und **8** veranschaulicht, wird durch die unterschiedlichen Längen der jeweiligen Ladekontaktflächen 81, 82, 83 und 84 sichergestellt, dass stets immer die Ladekontaktfläche 84 mit der Kontaktfläche 89 zur Ausbildung des Signalkontaktes kontaktierend ist, wenn auch alle anderen Kontaktpaarungen ausgebildet sind. Selbst, wenn wie in **Fig. 7** dargestellt, die Kontaktfläche 87 nicht vollständig mit der Ladekontaktfläche 82 kontaktiert ist, ist die Ladekontaktfläche 84 mit der Kontaktfläche 89 nicht kontaktiert, sodass dann auch kein Signalkontakt über die Kontaktfläche 89 und die Ladekontaktfläche 84 hergestellt ist und ein Ladestrom an den Ladekontaktflächen 82 und 81 anliegen kann. Wie an dem Längsende 93 kann dies an dem gegenüberliegenden Längsende 94 durch den Längenunterschied der Ladekontaktfläche 81 und 84 für die Kontaktflächen 89 und 86 sichergestellt werden. In jedem Fall ist so ein jeweiliger Berührungskontakt der Ladekontaktflächen 81, 82, 83 und 84 mit den zugehörigen Kontaktflächen 86, 87, 88 bzw. 89 in einer definierten Reihenfolge ausbildbar bzw. trennbar.

## Patentansprüche

1. Schnellladesystem (10) für elektrisch angetriebene Fahrzeuge, insbesondere Elektrobusse oder dergleichen, zur Ausbildung einer elektrisch leitenden Verbindung zwischen einem Fahrzeug und einer stationären Ladestation, mit einer Kontaktvorrichtung (11, 58, 74), einer Ladekontaktvorrichtung (12, 59, 75) und einer Positioniervorrichtung (15), wobei die Kontaktvorrichtung (11, 58, 74) oder die Ladekontaktvorrichtung (12, 59, 75) an einem Fahrzeug anordbar ist, wobei mit der Kontaktvorrichtung (11, 58, 74) die Ladekontaktvorrichtung (12, 59, 75) in einer Kontaktposition elektrisch kontaktierbar ist, wobei die Ladekontaktvorrichtung (12, 59, 75) einen Ladekontaktelementträger (31) mit Ladekontaktelementen (18, 76, 77, 78, 79) aufweist, wobei die Ladekontaktelemente (18, 76, 77, 78, 79) jeweils eine streifenförmige Ladekontaktfläche (50, 51, 52, 53, 60, 61, 62, 63, 81, 82, 83, 84) ausbilden, wobei die Kontaktvorrichtung (11, 58, 74) einen Kontaktelementträger (14) mit Kontaktelementen (17, 64, 85) aufweist, wobei die Kontaktelemente (17, 64, 85) jeweils eine Kontaktfläche (54, 55, 56, 57, 68, 69, 70, 71, 86, 87, 88, 89) ausbilden, die kleiner als die Ladekontaktflächen (50, 51, 52, 53, 60, 61, 62, 63, 81, 82, 83, 84) ausgebildet ist, wobei die Kontaktelemente (17, 64, 85) in der Kontaktposition mit den Ladekontaktelementen (18, 76, 77, 78, 79) jeweils zur Ausbildung von Kontaktpaarungen elektrisch kontaktierbar sind, wobei mittels der Positioniervorrichtung die Kontaktvorrichtung (11, 58, 74) relativ zur Ladekontaktvorrichtung (11, 58, 74) in Längsrichtung der streifenförmigen Ladekontaktflächen (50, 51, 52, 53, 60, 61, 62, 63, 81, 82, 83, 84) und/oder in Querrichtung der streifenförmigen Ladekontaktflächen (50, 51, 52, 53, 60, 61, 62, 63, 81, 82, 83, 84) positionierbar und in die Kontaktposition bringbar ist, wobei die streifenförmigen Ladekontaktflächen (50, 51, 52, 53, 60, 61, 62, 63, 81, 82, 83, 84) in einer Fahrtrichtung des Fahrzeugs angeordnet sind, wobei die Ladekontaktflächen (50, 51, 52, 53, 60, 61, 62, 63, 81, 82, 83, 84) und die Kontaktflächen (54, 55, 56, 57, 68, 69, 70, 71, 86, 87, 88, 89) in der Längsrichtung der Ladekontaktflächen relativ zueinander so angeordnet sind, dass an jeweiligen Längsenden (72, 73, 93, 94) der Ladekontaktflächen (50, 51, 52, 53, 60, 61, 62, 63, 81, 82, 83, 84) ein jeweiliger Berührungskontakt der Ladekontaktflächen (50, 51, 52, 53, 60, 61, 62, 63, 81, 82, 83, 84) mit den Kontaktflächen (54, 55, 56, 57, 68, 69, 70, 71, 86, 87, 88, 89) in einer definierten Reihenfolge bei einer Relativbewegung in der Längsrichtung der Ladekontaktflächen (50, 51, 52, 53, 60, 61, 62, 63, 81, 82, 83, 84) bei einem Zusammenführen wie auch bei einem voneinander Trennen in der Längsrichtung ausbildbar ist, wobei die Kontaktpaarungen für jeweils Leistungskontakte, einen Signalkontakt und einen Schutzkontakt des Schnelladesystems ausbildbar sind,
**dadurch gekennzeichnet,**
**dass** die Kontaktflächen (54, 55, 56, 57, 68, 69, 70, 71, 86, 87, 88, 89) der Kontaktelemente (17, 64, 85) in Fahrtrichtung des Fahrzeugs an dem Kontaktelementträger relativ zueinander versetzt angeordnet sind, wobei die Ladekontaktflächen (50, 51, 52, 53, 60, 61, 62, 63, 81, 82, 83, 84) und die Kontaktflächen (54, 55, 56, 57, 68, 69, 70, 71, 86, 87, 88, 89) in der Längsrichtung der Ladekontaktflächen (50, 51, 52, 53, 60, 61, 62, 63, 81, 82, 83, 84) relativ zueinander so angeordnet sind, dass bei einem derartigen Zusammenführen der Ladekontaktflächen (50, 51, 52, 53, 60, 61, 62, 63, 81, 82, 83, 84) mit den Kontaktflächen (54, 55, 56, 57, 68, 69, 70, 71, 86, 87, 88, 89) in der Längsrichtung der Ladekontaktflächen (50, 51, 52, 53, 60, 61, 62, 63, 81, 82, 83, 84) zuerst der Schutzkontakt und ein Leistungskontakt oder zuerst der Signalkontakt und ein Leistungskontakt ausbildbar ist, wobei hohe Ströme nur dann übertragbar sind, wenn die Kontaktpaarung des Schutzkontaktes und/oder des Signalkontaktes ausgebildet ist.

2. Schnellladesystem nach Anspruch 1,
**dadurch gekennzeichnet,**
**dass** die Längsenden (93, 94) der Ladekontaktfläche (52, 83) zur Ausbildung des Schutzkontaktes die Längsenden (93, 94) der übrigen Ladekontaktflächen (50, 51, 53, 81, 82, 84) jeweils in der Längsrichtung überragen.

3. Schnellladesystem nach Anspruch 1 oder 2,
**dadurch gekennzeichnet,**
**dass** die Längsenden (93, 94) der Ladekontaktfläche (50, 51, 81, 82) zur Ausbildung des Leistungskontaktes die Längsenden (93, 94) der Ladekontaktfläche (53, 84) zur Ausbildung des Signalkontaktes jeweils in der Längsrichtung überragen.

4. Schnellladesystem nach einem der Ansprüche 1 bis 3,
**dadurch gekennzeichnet,**
**dass** die Ladekontaktfläche (52, 83) zur Ausbildung des Schutzkontaktes länger ausgebildet ist als die Ladekontaktfläche (50, 51, 81, 82) zur Ausbildung des Leistungskontaktes, wobei die Ladekontaktfläche (50, 51, 81, 82) zur Ausbildung des Leistungskontaktes länger ausgebildet ist als die Ladekontaktfläche (53, 84) zur Ausbildung des Signalkontaktes.

5. Schnellladesystem nach einem der vorangehenden Ansprüche,
**dadurch gekennzeichnet,**
**dass** die Ladekontaktelemente (18, 76, 77, 78, 79) als Leiterstreifen (32, 33, 34, 35) ausgebildet sind, wobei die Leiterstreifen (32, 33, 34, 35) relativ zueinander parallel und in Richtung einer Längsachse des Ladekontaktelementträgers (31) angeordnet sind.

6. Schnellladesystem nach Anspruch 5,
**dadurch gekennzeichnet,**
**dass** die Kontaktflächen (54, 56, 69, 70, 87, 89) der Kontaktelemente (17, 64, 85) in einer Ebene (65, 90) angeordnet sind, die in der Kontaktposition orthogonal zu der Längsachse verläuft, wobei die Kontaktflächen (55, 57, 68, 71, 86, 88) der Kontaktelemente (17, 64, 85) in einer weiteren Ebene (66, 91) angeordnet sind, die in der Kontaktposition orthogonal zu der Längsachse verläuft, wobei die Ebenen (65, 66; 90, 91) in Richtung der Längsachse voneinander beabstandet sind, wobei in der Ebene (65, 90) und in der weiteren Ebene (66, 91) jeweils Kontaktelemente (17, 64, 85) zur Ausbildung von Leistungskontakten angeordnet sind.

7. Schnellladesystem nach einem der vorangehenden Ansprüche,
**dadurch gekennzeichnet,**
**dass** die Kontaktelemente (17, 64, 85) bolzenförmig ausgebildet sind.

8. Schnellladesystem nach einem der vorangehenden Ansprüche,
**dadurch gekennzeichnet,**
**dass** die Kontaktfläche (54, 55, 56, 57, 68, 69, 70, 71, 86, 87, 88, 89) punktförmig ausgebildet ist.

9. Schnellladesystem nach einem der vorangehenden Ansprüche,
**dadurch gekennzeichnet,**
**dass** die Kontaktvorrichtung (11, 58, 74) und die Ladekontaktvorrichtung (12, 59, 75) jeweils eine Hochachse (29) aufweisen, wobei die jeweiligen Hochachsen in der Kontaktposition fluchten.

10. Schnellladesystem nach Anspruch 9,
**dadurch gekennzeichnet,**
**dass** eine Führungsvorrichtung bei einem Zusammenführen von Kontaktvorrichtung (11, 58, 74) und Ladekontaktvorrichtung (12, 59, 75) die jeweiligen Hochachsen (29) in einer gemeinsamen Flucht positioniert.

11. Schnellladesystem nach einem der vorangehenden Ansprüche,
**dadurch gekennzeichnet,**
**dass** das Schnellladesystem (10) eine Führungsvorrichtung zur Führung der Kontaktvorrichtung (11, 58, 74) oder der Ladekontaktvorrichtung (12, 59, 75) in die Kontaktposition aufweist, wobei die Führungsvorrichtung so ausgebildet ist, dass bei einem Zusammenführen von Kontaktvorrichtung (11, 58, 74) und Ladekontaktvorrichtung (12, 59, 75) ein Berührungskontakt der Kontaktelemente (17, 64, 85) mit den Ladekontaktelementen (18, 76, 77, 78, 79) vor einem Erreichen der Kontaktposition unterbunden wird.

12. Schnellladesystem nach einem der vorangehenden Ansprüche,
**dadurch gekennzeichnet,**
**dass** die Kontaktvorrichtung (11, 58, 74) auf einem Fahrzeugdach und die Ladekontaktvorrichtung (12, 59, 75) an einer stationären Ladestation oder die Ladekontaktvorrichtung (12, 59, 75) auf einem Fahrzeugdach und die Kontaktvorrichtung (11, 58, 74) an einer stationären Ladestation anordbar ist.

13. Schnellladesystem nach einem der vorangehenden Ansprüche,
**dadurch gekennzeichnet,**
**dass** der Ladekontaktelementträger (31) eine Aufnahmeöffnung (30) für den Kontaktelementträger (14) ausbildet, wobei der Kontaktelementträger in die Aufnahmeöffnung des Ladekontaktelementträgers einsetzbar ist.

14. Schnellladesystem nach einem der Ansprüche 1 bis 12,
dadurch g e **kennzeichnet,**
dass der Kontaktelementträger eine Aufnahmeöffnung für den Ladekontaktelementträger ausbildet, wobei der Ladekontaktelementträger in die Aufnahmeöffnung des Kontaktelementträgers einsetzbar ist.

15. Schnellladesystem nach Anspruch 13 oder 14,
**dadurch gekennzeichnet,**
**dass** die Aufnahmeöffnung (30) bei einem Zusammenführen von Kontaktelementträger (14) und Ladekontaktelementträger (31) eine Führung für den Kontaktelementträger (14) oder den Ladekontaktelementträger (31) ausbildet.

16. Schnellladesystem nach einem der vorangehenden Ansprüche,
**dadurch gekennzeichnet,**
**dass** der Ladekontaktelementträger (31) als eine in einer Fahrtrichtung des Fahrzeuges anordbare, dachförmige Längsschiene ausgebildet ist.

17. Schnellladesystem nach einem der vorangehenden Ansprüche,
**dadurch gekennzeichnet,**
**dass** die Positioniervorrichtung (15) einen Pantografen oder eine Schwinge (19) umfasst, mittels der die Kontaktvorrichtung (11, 58, 74) in vertikaler Richtung relativ zur Ladekontaktvorrichtung (12, 59, 75) positionierbar ist.

18. Verfahren zur Ausbildung einer elektrisch leitenden Verbindung zwischen einem Fahrzeug und einer stationären Ladestation, insbesondere für ein Schnellladesystem (10) für elektrisch angetriebene Fahrzeuge, wie Elektrobusse oder dergleichen, mit einer Kontaktvorrichtung (11, 58, 74), einer Ladekontaktvorrichtung (12, 59, 75) und einer Positioniervorrichtung (15), wobei mit der Kontaktvorrichtung (11, 58, 74) die Ladekontaktvorrichtung (12, 59, 75) in einer Kontaktposition elektrisch kontaktiert wird, wobei die Ladekontaktvorrichtung (12, 59, 75) einen Ladekontaktelementträger (31) mit Ladekontaktelementen (18, 76, 77, 78, 79) aufweist, wobei die Ladekontaktelemente (18, 76, 77, 78, 79) jeweils eine streifenförmige Ladekontaktfläche (50, 51, 52, 53, 60, 61, 62, 63, 81, 82, 83, 84) ausbilden, wobei die Kontaktvorrichtung (11, 58, 74) einen Kontaktelementträger (14) mit Kontaktelementen (17, 64, 85) aufweist, wobei die Kontaktelemente (17, 64, 85) jeweils eine Kontaktfläche (54, 55, 56, 57, 68, 69, 70, 71, 86, 87, 88, 89) ausbilden, die kleiner als die Ladekontaktflächen (50, 51, 52, 53, 60, 61, 62, 63, 81, 82, 83, 84) ausgebildet ist, wobei die Kontaktelemente (17, 64, 85) in der Kontaktposition mit den Ladekontaktelementen (18, 76, 77, 78, 79) jeweils zur Ausbildung von Kontaktpaarungen elektrisch kontaktiert werden, wobei mittels der Positioniervorrichtung die Kontaktvorrichtung (11, 58, 74) relativ zur Ladekontaktvorrichtung (12, 59, 75) in Längsrichtung der streifenförmigen Ladekontaktflächen (50, 51, 52, 53, 60, 61, 62, 63, 81, 82, 83, 84) und/oder in Querrichtung der streifenförmigen Ladekontaktflächen (50, 51, 52, 53, 60, 61, 62, 63, 81, 82, 83, 84) positioniert und in die Kontaktposition gebracht wird, wobei die streifenförmigen Ladekontaktflächen (50, 51, 52, 53, 60, 61, 62, 63, 81, 82, 83, 84) in einer Fahrtrichtung des Fahrzeugs angeordnet sind, wobei zumindest eine Ladekontaktfläche (50, 51, 52, 53, 60, 61, 62, 63, 81, 82, 83, 84) mit einer Kontaktfläche (54, 55, 56, 57, 68, 69, 70, 71, 86, 87, 88, 89) an einem Längsende (72, 73, 93, 94) der Ladekontaktfläche (50, 51, 52, 53, 60, 61, 62, 63, 81, 82, 83, 84) kontaktiert wird, wobei an jeweiligen Längsenden (72, 73, 93, 94) der Ladekontaktflächen (50, 51, 52, 53, 60, 61, 62, 63, 81, 82, 83, 84) ein jeweiliger Berührungskontakt der Ladekontaktflächen (50, 51, 52, 53, 60, 61, 62, 63, 81, 82, 83, 84) mit den Kontaktflächen (54, 55, 56, 57, 68, 69, 70, 71, 86, 87, 88, 89) in einer definierten Reihenfolge bei einem Zusammenführen wie auch bei einem voneinander Trennen in der Längsrichtung ausgebildet wird, wobei die Kontaktpaarungen für jeweils Leistungskontakte, einen Signalkontakt und einen Schutzkontakt des Schnelladesystems ausgebildet werden, **dadurch gekennzeichnet,**
**dass** die Kontaktflächen (54, 55, 56, 57, 68, 69, 70, 71, 86, 87, 88, 89) der Kontaktelemente (17, 64, 85) in Fahrtrichtung des Fahrzeugs an dem Kontaktelementträger relativ zueinander versetzt angeordnet sind, wobei die Ladekontaktflächen (50, 51, 52, 53, 60, 61, 62, 63, 81, 82, 83, 84) und die Kontaktflächen (54, 55, 56, 57, 68, 69, 70, 71, 86, 87, 88, 89) in der Längsrichtung der Ladekontaktflächen (50, 51, 52, 53, 60, 61, 62, 63, 81, 82, 83, 84) relativ zueinander so angeordnet sind, dass bei einem Zusammenführen der Ladekontaktflächen (50, 51, 52, 53, 60, 61, 62, 63, 81, 82, 83, 84) mit den Kontaktflächen (54, 55, 56, 57, 68, 69, 70, 71, 86, 87, 88, 89) in der Längsrichtung der Ladekontaktflächen (50, 51, 52, 53, 60, 61, 62, 63, 81, 82, 83, 84) zuerst der Schutzkontakt und nachfolgend ein Leistungskontakt oder zuerst der Signalkontakt und nachfolgend ein Leistungskontakt ausgebildet wird, wobei eine Übertragung hoher Ströme nur dann erfolgt, wenn die Kontaktpaarung des Schutzkontaktes und/oder des Signalkontaktes ausgebildet ist.

19. Verfahren nach Anspruch 18,
**dadurch gekennzeichnet,**
**dass** bei einem Trennen der Ladekontaktflächen (50, 51, 52, 53, 81, 82, 83, 84) und der Kontaktflächen (54, 55, 56, 57, 86, 87, 88, 89) zuerst der Signalkontakt, nachfolgend der Leistungskontakt und weiter nachfolgend der Schutzkontakt getrennt wird.

## Claims

1. A fast charging system (10) for electrically driven vehicles, in particular electric busses or the like, for forming an electrically conductive connection between a vehicle and a stationary charging station, the fast charging system (10) having a contact device (11, 58, 74), a charging contact device (12, 59, 75) and a positioning device (15), said contact device (11, 58, 74) or said charging contact device (12, 59, 75) being disposable on a vehicle, said charging contact device (12, 59, 75) being electrically contacted using the contact device (11, 58, 74) when in a contact position, said charging contact device (12, 59, 75) comprising a charging-contact-element carrier (31) having charging contact elements (18, 76, 77, 78, 79), said charging contact elements (18, 76, 77, 78, 79) each forming a strip-shaped charging contact surface (50, 51, 52, 53, 60, 61, 62, 63, 81, 82, 83, 84), said contact device (11, 58, 74) comprising a contact element carrier (14) having contact elements (17, 64, 85), said contact elements (17, 64, 85) each forming a contact surface (54, 55, 56, 57, 68, 69, 70, 71, 86, 87, 88, 89) which is smaller than the charging contact surfaces (50, 51, 52, 53, 60, 61, 62, 63, 81, 82, 83, 84), said contact elements (17, 64, 85) being electrically contacted with the charging contact elements (18, 76, 77, 78, 79) for forming contact pairs in each instance when in the contact position, said contact device (11, 58, 74) being positioned in a longitudinal direction of the strip-shaped charging contact surfaces (50, 51, 52, 53, 60, 61, 62, 63, 81, 82, 83, 84) and/or in a transverse direction of the strip-shaped charging contact surfaces (50, 51, 52, 53, 60, 61, 62, 63, 81, 82, 83, 84) with respect to the charging contact device (11, 58, 74) as well as being moved to the contact position by means of the positioning device, the strip-shaped charging contact surfaces (50, 51, 52, 53, 60, 61, 62, 63, 81, 82, 83, 84) being disposed in a moving direction of the vehicle, the charging contact surfaces (50, 51, 52, 53, 60, 61, 62, 63, 81, 82, 83, 84) and the contact surfaces (54, 55, 56, 57, 68, 69, 70, 71, 86, 87, 88, 89) being disposed such in the longitudinal direction with respect to each other that a respective physical contact between the charging contact surfaces (50, 51, 52, 53, 60, 61, 62, 63, 81, 82, 83, 84) and the contact surfaces (54, 55, 56, 57, 68, 69, 70, 71, 86, 87, 88, 89) is formed in a defined order at respective longitudinal ends (72, 73, 93, 94) of the charging contact surfaces (50, 51, 52, 53, 60, 61, 62, 63, 81, 82, 83, 84) during a relative movement in the longitudinal direction of the charging contact surfaces (50, 51, 52, 53, 60, 61, 62, 63, 81, 82, 83, 84) during joining as well as separation in the longitudinal direction, the contact pairs being formed for power contacts, a signal contact and a protective-ground contact of the fast charging system,
**characterized in that**
the contact surfaces (54, 55, 56, 57, 68, 69, 70, 71, 86, 87, 88, 89) of the contact elements (17, 64, 85) are disposed at an offset relative to each other in the moving direction of the vehicle on the contact element carrier, the charging contact surfaces (50, 51, 52, 53, 60, 61, 62, 63, 81, 82, 83, 84) and the contact surfaces (54, 55, 56, 57, 68, 69, 70, 71, 86, 87, 88, 89) being disposed such with respect to each other in the longitudinal direction of the charging contact surfaces (50, 51, 52, 53, 60, 61, 62, 63, 81, 82, 83, 84) that first the protective-ground contact and a power contact or first the signal contact and a power contact are formed when the charging contact surfaces (50, 51, 52, 53, 60, 61, 62, 63, 81, 82, 83, 84) are joined with the contact surfaces (54, 55, 56, 57, 68, 69, 70, 71, 86, 87, 88, 89) in this manner, high currents being transmittable only when the contact pair of the protective-ground contact and/or the signal contact has been formed.

2. The fast charging system according to claim 1,
**characterized in that**
the longitudinal ends (93, 94) of the charging contact surface (52, 83) for forming the protective-ground contact each protrude beyond the longitudinal ends (93, 94) of the remaining charging contact surfaces (50, 51, 53, 81, 82, 84) in the longitudinal direction.

3. The fast charging system according to claim 1 or 2,
**characterized in that**
the longitudinal ends (93, 94) of the charging contact surface (50, 51, 81, 82) for forming the power contact each protrude beyond the longitudinal ends (93, 94) of the charging contact surface (53, 84) for forming the signal contact in the longitudinal direction.

4. The fast charging system according to any one of claims 1 to 3, **characterized in that**
the charging contact surface (52, 83) for forming the protective-ground contact is longer than the charging contact surface (50, 51, 81, 82) for forming the power contact, said charging contact surface (50, 51, 81, 82) for forming the power contact being longer than the charging contact surface (53, 84) for forming the signal contact.

5. The fast charging system according to any one of the preceding claims,
**characterized in that**
the charging contact elements (18, 76, 77, 78, 79) are realized as conductor strips (32, 33, 34, 35), said conductor strips (32, 33, 34, 35) being disposed parallel to each other and in the direction of a longitudinal axis of the charging-contact-element carrier (31).

6. The fast charging system according to claim 5,
**characterized in that**
the contact surfaces (54, 56, 69, 70, 87, 89) of the contact elements (17, 64, 85) are disposed in a plane (65, 90) which extends orthogonally to the longitudinal axis when in the contact position, the contact surfaces (55, 57, 68, 71, 86, 88) of the contact elements (17, 64, 85) being disposed in an additional plane (66, 91) which extends orthogonally to the longitudinal axis when in the contact position, said planes (65, 66; 90, 91) being distanced from each other in the direction of the longitudinal axis, contact elements (17, 64, 85) for forming power contacts being disposed in the plane (65, 90) and the additional plane (66, 91), respectively.

7. The fast charging system according to any one of the preceding claims,
**characterized in that**
the contact elements (17, 64, 85) are formed in the shape of bolts.

8. The fast charging system according to any one of the preceding claims,
**characterized in that**
the contact surface (54, 55, 56, 57, 68, 69, 70, 71, 86, 87, 88, 89) is punctiform.

9. The fast charging system according to any one of the preceding claims,
**characterized in that**
the contact device (11, 58, 74) and the charging contact device (12, 59, 75) each comprise a vertical axis (29), said respective vertical axes aligning flush when in the contact position.

10. The fast charging system according to claim 9,
**characterized in that**
a guiding device positions the respective vertical axes (29) in a shared alignment when joining the contact device (11, 58, 74) and the charging contact device (12, 59, 75).

11. The fast charging system according to any one of the preceding claims,
**characterized in that**
the fast charging system (10) comprises a guiding device for guiding the contact device (11, 58, 74) or the charging contact device (12, 59, 75) to the contact position, the guiding device being realized such that when jointing the contact device (11, 58, 74) and the charging contact device (12, 59, 75), a physical contact between the contact elements (17, 64, 85) and the charging contact elements (18, 76, 77, 78, 79) is prevented before the contact position is attained.

12. The fast charging system according to any one of the preceding claims,
**characterized in that**
the contact device (11, 58, 74) is disposed on a vehicle roof and the charging contact device (12, 59, 75) is disposed on a stationary charging station, or the charging contact device (12, 59, 75) is disposed on a vehicle roof and the contact device (11, 58, 74) is disposed on a stationary charging station.

13. The fast charging system according to any one of the preceding claims,
**characterized in that**
the charging-contact-element carrier (31) forms a receiving opening (30) for the contact element carrier (14), said contact element carrier being inserted into the receiving opening of the charging-contact-element carrier.

14. The fast charging system according to any one of claims 1 to 12,
**characterized in that**
the contact element carrier forms a receiving opening for the charging-contact-element carrier, said charging-contact-element carrier being inserted into the receiving opening of the contact element carrier.

15. The fast charging system according to claim 13 or 14,
**characterized in that**
the receiving opening (30) forms a guide for the contact element carrier (14) or the charging-contact-element carrier (13) when joining the contact element carrier (14) and the charging-contact-element carrier (31).

16. The fast charging system according to any one of the preceding claims,
**characterized in that**
the charging-contact-element carrier (31) is formed as a longitudinal roof-shaped rail which is disposed in a moving direction of the vehicle.

17. The fast charging system according to any one of the preceding claims,
**characterized in that**
the positioning device (15) comprises a pantograph or a rocker (19) by means of which the contact device (11, 58, 74) is positioned in a vertical direction with respect to the charging contact device (12, 59, 75).

18. A method for forming an electrically conductive connection between a vehicle and a stationary charging station, in particular for a fast charging system (10) for electrically driven vehicles, such as electric busses or the like, the fast charging system (10) having a contact device (11, 58, 74), a charging contact device (12, 59, 75) and a positioning device (15), said charging contact device (12, 59, 75) being electrically contacted using the contact device (11, 58, 74) when in a contact position, said charging contact device (12, 59, 75) comprising a charging-contact-element carrier (31) having charging contact elements (18, 76, 77, 78, 79), said charging contact elements (18, 76, 77, 78, 79) each forming a strip-shaped charging contact surface (50, 51, 52, 53, 60, 61, 62, 63, 81, 82, 83, 84), said contact device (11, 58, 74) comprising a contact element carrier (14) having contact elements (17, 64, 85), said contact elements (17, 64, 85) each forming a contact surface (54, 55, 56, 57, 68, 69, 70, 71, 86, 87, 88, 89) which is smaller than the charging contact surfaces (50, 51, 52, 53, 60, 61, 62, 63, 81, 82, 83, 84), said contact elements (17, 64, 85) being electrically contacted with the charging contact elements (18, 76, 77, 78, 79) for forming contact pairs in each instance when in the contact position, said contact device (11, 58, 74) being positioned in a longitudinal direction of the strip-shaped charging contact surfaces (50, 51, 52, 53, 60, 61, 62, 63, 81, 82, 83, 84) and/or in a transverse direction of the strip-shaped charging contact surfaces (50, 51, 52, 53, 60, 61, 62, 63, 81, 82, 83, 84) with respect to the charging contact device (12, 59, 75) as well as being moved to the contact position by means of the positioning device, the strip-shaped charging contact surfaces (50, 51, 52, 53, 60, 61, 62, 63, 81, 82, 83, 84) being disposed in a moving direction of the vehicle, at least one charging contact surface (50, 51, 52, 53, 60, 61, 62, 63, 81, 82, 83, 84) being contacted with a contact surface (54, 55, 56, 57, 68, 69, 70, 71, 86, 87, 88, 89) at a longitudinal end (72, 73, 93, 94) of the charging contact surface (50, 51, 52, 53, 60, 61, 62, 63, 81, 82, 83, 84), a respective physical contact between the charging contact surfaces (50, 51, 52, 53, 60, 61, 62, 63, 81, 82, 83, 84) and the contact surfaces (54, 55, 56, 57, 68, 69, 70, 71, 86, 87, 88, 89) being formed in a defined order at respective longitudinal ends (72, 73, 93, 94) of the charging contact surfaces (50, 51, 52, 53, 60, 61, 62, 63, 81, 82, 83, 84) during joining as well as separation in the longitudinal direction, the contact pairs being formed for power contacts, a signal contact and a protective-ground contact of the fast charging system,
**characterized in that**
the contact surfaces (54, 55, 56, 57, 68, 69, 70, 71, 86, 87, 88, 89) of the contact elements (17, 64, 85) are disposed at an offset relative to each other in the moving direction of the vehicle on the contact element carrier, said charging contact surfaces (50, 51, 52, 53, 60, 61, 62, 63, 81, 82, 83, 84) and the contact surfaces (54, 55, 56, 57, 68, 69, 70, 71, 86, 87, 88, 89) being disposed such with respect to each other in the longitudinal direction of the charging contact surfaces (50, 51, 52, 53, 60, 61, 62, 63, 81, 82, 83, 84) that when joining the charging contact surfaces (50, 51, 52, 53, 60, 61, 62, 63, 81, 82, 83, 84) and the contact surfaces (54, 55, 56, 57, 68, 69, 70, 71, 86, 87, 88, 89), first the protective-ground contact and then a power contact or first the signal contact and then a power contact are formed in the longitudinal direction of the charging contact surfaces (50, 51, 52, 53, 60, 61, 62, 63, 81, 82, 83, 84), high currents being transmitted only when the contact pair of the protective-ground contact and/or the signal contact has been formed.

19. The method according to claim 18,
**characterized in that**
when the charging contact surfaces (50, 51, 52, 53, 81, 82, 83, 84) and the contact surfaces (54, 55, 56, 57, 86, 87, 88, 89) are separated, first the signal contact, then the power contact and then the protective-ground contact are disconnected.

## Revendications

1. Système de charge rapide (10) pour des véhicules électriques, notamment des bus électriques ou des véhicules semblables, le système de charge rapide (10) étant destiné à former une connexion électriquement conductrice entre un véhicule et une station de charge stationnaire, le système de charge rapide (10) comprenant un dispositif de contact (11, 58, 74), un dispositif de contact de charge (12, 59, 75) et un dispositif de positionnement (15), le dispositif de contact (11, 58, 74) ou le dispositif de contact de charge (12, 59, 75) étant configuré pour être disposé sur un véhicule, le dispositif de contact (11, 58, 74) étant configuré pour contacter électriquement le dispositif de contact de charge (12, 59, 75) dans une position de contact, le dispositif de contact de charge (12, 59, 75) comprenant un porteur d'éléments de contact de charge (31) ayant des éléments de contact de charge (18, 76, 77, 78, 79), les éléments de contact de charge (18, 76, 77, 78, 79) formant chacun une surface de contact de charge (50, 51, 52, 53, 60, 61, 62, 63, 81, 82, 83, 84) en forme de bande, le dispositif de contact (11, 58, 74) comprenant un porteur d'éléments de contact (14) ayant des éléments de contact (17, 64, 85), les éléments de contact (17, 64, 85) formant chacun une surface de contact (54, 55, 56, 57, 68, 69, 70, 71, 86, 87, 88, 89) qui est plus petite que les surfaces de contact de charge (50, 51, 52, 53, 60, 61, 62, 63, 81, 82, 83, 84), les éléments de contact (17, 64, 85) étant configurés pour être contactés électriquement avec les éléments de contact de charge (18, 76, 77, 78, 79) dans la position de contact afin de former des paires de contact respectives, le dispositif de positionnement étant configuré pour positionner le dispositif de contact (11, 58, 74) dans une direction longitudinale des surfaces de contact de charge (50, 51, 52, 53, 60, 61, 62, 63, 81, 82, 83, 84) en forme de bande et/ou dans une direction transversale des surfaces de contact de charge (50, 51, 52, 53, 60, 61, 62, 63, 81, 82, 83, 84) en forme de bande par rapport au dispositif de contact de charge (11, 58, 74) et pour le déplacer vers la position de contact, les surfaces de contact de charge (50, 51, 52, 53, 60, 61, 62, 63, 81, 82, 83, 84) en forme de bande étant disposées dans une direction de marche du véhicule, les surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) étant disposées de telle manière l'une par rapport à l'autre dans la direction longitudinale que des contacts physiques respectifs entre les surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) sont formés dans un ordre défini à des extrémités longitudinales (72, 73, 93, 94) respectives des surfaces de contact de charge (50, 51, 52, 53, 60, 61, 62, 63, 81, 82, 83, 84) lors d'un mouvement relatif dans la direction longitudinale des surfaces de contact de charge (50, 51, 52, 53, 60, 61, 62, 63, 81, 82, 83, 84) lorsqu'elles sont jointes ainsi que lorsqu'elles sont séparées dans la direction longitudinale, les paires de contact étant formées pour des contacts de puissance, un contact de signal et un contact de protection du système de charge rapide,
**caractérisé en ce que**
les surfaces de contact (54, 55, 56, 57, 68, 69, 70, 71, 86, 87, 88, 89) des éléments de contact (17, 64, 85) sont décalées l'une par rapport à l'autre dans la direction de marche du véhicule sur le porteur d'éléments de contact, les surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) étant disposées de telle manière l'une par rapport à l'autre dans la direction longitudinale des surfaces de contact de charge (50, 51, 52, 53, 60, 61, 62, 63, 81, 82, 83, 84) que le contact de protection et un contact de puissance sont formés d'abord ou le contact de signal et un contact de puissance sont formés d'abord quand les surfaces de contact de charge (50, 51, 52, 53, 60, 61, 62, 63, 81, 82, 83, 84) sont jointes avec les surfaces de contact (54, 55, 56, 57, 68, 69, 70, 71, 86, 87, 88, 89) de telle manière, des hauts courants ne pouvant être transmis que si la paire de contacts du contact de protection et/ou du contact de signal a été formée.

2. Système de charge rapide selon la revendication 1,
**caractérisé en ce que**
les extrémités longitudinales (93, 94) de la surface de contact de charge (52, 83) pour former le contact de protection dépassent chacune les extrémités longitudinales (93, 94) des autres surfaces de contact de charge (50, 51, 53, 81, 82, 84) dans la direction longitudinale.

3. Système de charge rapide selon la revendication 1 ou 2,
**caractérisé en ce que**
les extrémités longitudinales (93, 94) de la surface de contact de charge (50, 51, 81, 82) pour former le contact de puissance dépassent chacune les extrémités longitudinales (93, 94) de la surface de contact de charge (53, 84) pour former le contact de signal dans la direction longitudinale.

4. Système de charge rapide selon l'une quelconque des revendications 1 à 3,
**caractérisé en ce que**
la surface de contact de charge (52, 83) pour former le contact de protection est plus longue que la surface de contact de charge (50, 51, 81, 82) pour former le contact de puissance, la surface de contact de charge (50, 51, 81, 82) pour former le contact de puissance étant plus longue que la surface de contact de charge (53, 84) pour former le contact de signal.

5. Système de charge rapide selon l'une quelconque des revendications précédentes,
**caractérisé en ce que**
les éléments de contact de charge (18, 76, 77, 78, 79) sont des bandes conductrices (32, 33, 34, 35), les bandes conductrices (32, 33, 34, 35) étant disposées parallèlement l'une par rapport à l'autre et dans la direction d'un axe longitudinal du porteur d'éléments de contact de charge (31).

6. Système de charge rapide selon la revendication 5,
**caractérisé en ce que**
les surfaces de contact (54, 56, 69, 70, 87, 89) des éléments de contact (17, 64, 85) sont disposées dans un plan (65, 90) qui s'étend orthogonalement à l'axe longitudinal dans la position de contact, les surfaces de contact (55, 57, 68, 71, 86, 88) des éléments de contact (17, 64, 85) étant disposées dans un plan additionnel (66, 91) qui s'étend orthogonalement à l'axe longitudinal dans la position de contact, le plans (65, 66 ; 90, 91) étant espacés l'un de l'autre dans la direction de l'axe longitudinal, des éléments de contact (17, 64, 85) pour former des contacts de puissance étant disposés dans le plan (65, 90) et dans le plan additionnel (66, 91).

7. Système de charge rapide selon l'une quelconque des revendications précédentes,
**caractérisé en ce que**
les éléments de contact (17, 64, 85) sont en forme de boulon.

8. Système de charge rapide selon l'une quelconque des revendications précédentes,
**caractérisé en ce que**
la surface de contact (54, 55, 56, 57, 68, 69, 70, 71, 86, 87, 88, 89) est en forme de point.

9. Système de charge rapide selon l'une quelconque des revendications précédentes,
**caractérisé en ce que**
le dispositif de contact (11, 58, 74) et le dispositif de contact de charge (12, 59, 75) comprennent chacun un axe vertical (29), les axes verticaux respectifs étant alignés dans la position de contact.

10. Système de charge rapide selon la revendication 9,
**caractérisé en ce**
**qu'**un dispositif de guidage positionne les axes verticaux (29) respectifs dans un alignement commun lorsque le dispositif de contact (11, 58, 74) et le dispositif de contact de charge (12, 59, 75) sont joints.

11. Système de charge rapide selon l'une quelconque des revendications précédentes,
**caractérisé en ce que**
le système de charge rapide (10) comprend un dispositif de guidage pour guider le dispositif de contact (11, 58, 74) ou le dispositif de contact de charge (12, 59, 75) dans la position de contact, le dispositif de guidage étant configuré de telle manière qu'en joignant le dispositif de contact (11, 58, 74) et le dispositif de contact de charge (12, 59, 75), un contact physique entre les éléments de contact (17, 64, 85) et les éléments de contact de charge (18, 76, 77, 78, 79) est empêché jusqu'à ce que la position de contact est obtenue.

12. Système de charge rapide selon l'une quelconque des revendications précédentes,
**caractérisé en ce que**
le dispositif de contact (11, 58, 74) est disposé sur un toit de véhicule et le dispositif de contact de charge (12, 59, 75) est disposé sur une station de charge stationnaire ou le dispositif de contact de charge (12, 59, 75) est disposé sur un toit de véhicule et le dispositif de contact (11, 58, 74) est disposé sur une station de charge stationnaire.

13. Système de charge rapide selon l'une quelconque des revendications précédentes,
**caractérisé en ce que**
le porteur d'éléments de contact de charge (31) forme une ouverture de réception (30) pour le porteur d'éléments de contact (14), le porteur d'éléments de contact étant configuré pour être inséré dans l'ouverture de réception du porteur d'éléments de contact de charge.

14. Système de charge rapide selon l'une quelconque des revendications 1 à 12,
**caractérisé en ce que**
le porteur d'éléments de contact forme une ouverture de réception pour le porteur d'éléments de contact de charge, le porteur d'éléments de contact de charge étant configuré pour être inséré dans l'ouverture de réception du porteur d'éléments de contact.

15. Système de charge rapide selon la revendication 13 ou 14,
**caractérisé en ce que**
l'ouverture de réception (30) forme un guide pour le porteur d'éléments de contact (14) ou le porteur d'éléments de contact de charge (13) enjoignant le porteur d'éléments de contact (14) et le porteur d'éléments de contact de charge (31).

16. Système de charge rapide selon l'une quelconque des revendications précédentes,
**caractérisé en ce que**
le porteur d'éléments de contact de charge (31) est un rail longitudinal en forme de toit configuré pour être disposé dans une direction de marche du véhicule.

17. Système de charge rapide selon l'une quelconque des revendications précédentes,
**caractérisé en ce que**
le dispositif de positionnement (15) comprend un pantographe ou un bras oscillant (19) configuré pour positionner le dispositif de contact (11, 58, 74) dans une direction verticale par rapport au dispositif de contact de charge (12, 59, 75).

18. Procédé destiné à former une connexion électriquement conductrice entre un véhicule et une station de charge stationnaire, notamment pour un système de charge rapide (10) pour des véhicules électriques, tels que des bus électriques ou des véhicules semblables, le système de charge rapide (10) comprenant un dispositif de contact (11, 58, 74), un dispositif de contact de charge (12, 59, 75) et un dispositif de positionnement (15), le dispositif de contact (11, 58, 74) contactant électriquement le dispositif de contact de charge (12, 59, 75) dans une position de contact, le dispositif de contact de charge (12, 59, 75) comprenant un porteur d'éléments de contact de charge (31) ayant des éléments de contact de charge (18, 76, 77, 78, 79), les éléments de contact de charge (18, 76, 77, 78, 79) formant chacun une surface de contact de charge (50, 51, 52, 53, 60, 61, 62, 63, 81, 82, 83, 84) en forme de bande, le dispositif de contact (11, 58, 74) comprenant un porteur d'éléments de contact (14) ayant des éléments de contact (17, 64, 85), les éléments de contact (17, 64, 85) formant chacun une surface de contact (54, 55, 56, 57, 68, 69, 70, 71, 86, 87, 88, 89) qui est plus petite que les surfaces de contact de charge (50, 51, 52, 53, 60, 61, 62, 63, 81, 82, 83, 84), les éléments de contact (17, 64, 85) étant contactés électriquement avec les éléments de contact de charge (18, 76, 77, 78, 79) dans la position de contact afin de former des paires de contact respectives, le dispositif de positionnement positionnant le dispositif de contact (11, 58, 74) dans une direction longitudinale des surfaces de contact de charge (50, 51, 52, 53, 60, 61, 62, 63, 81, 82, 83, 84) en forme de bande et/ou dans une direction transversale des surfaces de contact de charge (50, 51, 52, 53, 60, 61, 62, 63, 81, 82, 83, 84) en forme de bande par rapport au dispositif de contact de charge (12, 59, 75) et le déplace vers la position de contact, les surfaces de contact de charge (50, 51, 52, 53, 60, 61, 62, 63, 81, 82, 83, 84) en forme de bande étant disposées dans une direction de marche du véhicule, au moins une surface de contact de charge (50, 51, 52, 53, 60, 61, 62, 63, 81, 82, 83, 84) étant contactée avec une surface de contact (54, 55, 56, 57, 68, 69, 70, 71, 86, 87, 88, 89) à une extrémité longitudinale (72, 73, 93, 94) de la surface de contact de charge (50, 51, 52, 53, 60, 61, 62, 63, 81, 82, 83, 84), des contacts physiques respectifs entre les surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) étant formés dans un ordre défini à des extrémités longitudinales (72, 73, 93, 94) respectives des surfaces de contact de charge (50, 51, 52, 53, 60, 61, 62, 63, 81, 82, 83, 84) lorsque ils sont jointes ainsi que séparées dans la direction longitudinale, les paires de contact étant formées pour des contacts de puissance, un contact de signal et un contact de protection du système de charge rapide,
**caractérisé en ce que**
les surfaces de contact (54, 55, 56, 57, 68, 69, 70, 71, 86, 87, 88, 89) des éléments de contact (17, 64, 85) sont décalées l'une par rapport à l'autre dans la direction de marche du véhicule sur le porteur d'éléments de contact, le surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) étant disposées de telle manière l'une par rapport à l'autre dans la direction longitudinale des surfaces de contact de charge (50, 51, 52, 53, 60, 61, 62, 63, 81, 82, 83, 84) qu'en joignant les surfaces de contact de charge (50, 51, 52, 53, 60, 61, 62, 63, 81, 82, 83, 84) et les surfaces de contact (54, 55, 56, 57, 68, 69, 70, 71, 86, 87, 88, 89) dans la direction longitudinale des surfaces de contact de charge (50, 51, 52, 53, 60, 61, 62, 63, 81, 82, 83, 84), le contact de protection est formé d'abord et puis un contact de puissance est formé ou le contact de signal est formé d'abord et puis un contact de puissance est formé, des hauts courants n'étant transmis que si la paire de contacts du contact de protection et/ou du contact de signal a été formée.

19. Procédé selon la revendication 18,
**caractérisé en ce**
**qu'**en séparant les surfaces de contact de charge (50, 51, 52, 53, 81, 82, 83, 84) et les surfaces de contact (54, 55, 56, 57, 86, 87, 88, 89), le contact de signal est d'abord séparé, puis le contact de puissance est séparé et puis le contact de protection est séparé.
